(19) Europäisches Patentamt
European Patent Office
Office européen des brevets

(11) EP 4 564 445 A1

(12) **DEMANDE DE BREVET EUROPEEN**

(43) Date de publication:
**04.06.2025 Bulletin 2025/23**

(21) Numéro de dépôt: **24214306.3**

(22) Date de dépôt: **20.11.2024**

(51) Classification Internationale des Brevets (IPC):
***H01M 4/04** (2006.01)* ***H01M 4/139** (2010.01)*

(52) Classification Coopérative des Brevets (CPC):
**H01M 4/0435; H01M 4/0404; H01M 4/139**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(30) Priorité: **21.11.2023 FR 2312823**

(71) Demandeur: **Commissariat à l'Energie Atomique et aux Energies Alternatives**
**75015 Paris (FR)**

(72) Inventeurs:
- **SALOMON, Jérémie**
  **38054 GRENOBLE CEDEX 09 (FR)**
- **MERCHAT, Léo**
  **38054 GRENOBLE cedex 09 (FR)**
- **AMESTOY, Benjamin**
  **38054 GRENOBLE CEDEX 09 (FR)**

(74) Mandataire: **Brevalex**
**Tour Trinity**
**1 B Place de la Défense**
**92400 Courbevoie (FR)**

# (54) PROCÉDÉ DE FABRICATION D'UN ENSEMBLE COMPRENANT UNE ÉLECTRODE ET UN COLLECTEUR DE COURANT

(57) L'invention a trait à un procédé de fabrication d'un ensemble comprenant une première électrode plane comprenant une matrice polymérique piégeant un électrolyte et un collecteur de courant, ladite première électrode étant déposée sur une face dudit collecteur de courant, ledit procédé comprenant :
a) une étape de préparation d'une composition comprenant les ingrédients destinés à entrer dans la constitution de la première électrode ;
b) une étape de formation d'une bande par passage de ladite composition à travers une filière ;
c) une étape de laminage de la bande obtenue en b),
d) une étape de colaminage de la bande laminée obtenue en c) avec un collecteur de courant, moyennant quoi il résulte l'ensemble comprenant la première électrode plane et le collecteur de courant.

EP 4 564 445 A1

# Description

## Domaine technique

La présente invention a trait à un procédé de fabrication d'un ensemble comprenant au moins une électrode comprenant une matrice polymérique piégeant un électrolyte et un collecteur de courant, cet ensemble étant destiné à être incorporé dans des accumulateurs électrochimiques.
Le domaine général de l'invention peut être défini comme celui des dispositifs de stockage d'énergie, en particulier, celui des accumulateurs électrochimiques.

## État de la technique

Les accumulateurs électrochimiques fonctionnent sur le principe de cellules électrochimiques aptes à délivrer un courant électrique grâce à la présence dans chacune d'entre elles d'un couple d'électrodes (respectivement, une électrode positive et une électrode négative) séparées par un électrolyte, les électrodes comprenant des matériaux spécifiques aptes à réagir selon une réaction d'oxydo-réduction, moyennant quoi il y a échange d'électrons à l'origine du courant électrique et échange d'ions qui vont circuler d'une électrode à l'autre par le biais d'un électrolyte.
Parmi les accumulateurs souscrivant à ce principe, les accumulateurs fonctionnant sur le principe d'insertion-désinsertion d'un élément métallique intervenant au niveau des électrodes (et plus spécifiquement, des matériaux actifs d'électrodes) et connus sous la terminologie d'accumulateurs métal-ion (par exemple, Li-ion, Na-ion, K-ion, Ca-ion, Mg-ion ou Al-ion) ont supplanté les autres types d'accumulateurs, tels que les accumulateurs acide-plomb, les accumulateurs Ni-MH, notamment pour leurs performances en termes de densités d'énergie. En effet, les accumulateurs M-ion, tels que les accumulateurs Li-ion, permettent, en particulier, d'obtenir des densités d'énergie massique et volumique (pouvant être supérieures à 180 $Wh.kg^{-1}$) nettement supérieures à celles des accumulateurs Ni-MH et Ni-Cd (pouvant aller de 50 et 100 $Wh.kg^{-1}$) et Acide-plomb (pouvant aller de 30 à 35 $Wh.kg^{-1}$).
D'un point de vue fonctionnel, dans les accumulateurs métal-ion, la réaction à l'origine de la production de courant (c'est-à-dire lorsque l'accumulateur est en mode de décharge) met en jeu le transfert, par l'intermédiaire d'un électrolyte conducteur d'ions métalliques, de cations métalliques provenant d'une électrode négative qui viennent s'intercaler dans le réseau accepteur de l'électrode positive, tandis que des électrons issus de la réaction à l'électrode négative vont alimenter le circuit extérieur, auquel sont reliées les électrode positive et négative.
Plus spécifiquement, dans le cas d'un accumulateur Li-ion, l'électrode positive peut comprendre, comme matériaux d'insertion du lithium, des composés phosphatés à base de lithium (par exemple, $LiFePO_4$), un oxyde de manganèse lithié, éventuellement substitué (tel que $LiMn_2O_4$), un matériau à base de lithium-nickel-manganèse-cobalt $LiNi_xMn_yCo_zO_2$ avec x+y+z=1 (connu également sous l'abréviation NMC), tel que $LiNi_{0,33}Mn_{0,33}Co_{0,33}O_2$ ou $LiNi_{0,6}Mn_{0,2}Co_{0,2}O_2$, un matériau à base de lithium-nickel-cobalt-aluminium $LiNi_xCo_yAl_zO_2$ avec x+y+z = 1 (connu également sous l'abréviation NCA), tel que $LiNi_{0,8}CO_{0,15}Al_{0,05}O_2$.
L'électrode négative peut comprendre, comme matériaux d'insertion du lithium, un matériau carboné, tel que du graphite, un composé à base de silicium, tel qu'un carbure de silicium SiC ou un oxyde de silicium $SiO_x$, un oxyde de titane lithié, tel que $Li_4Ti_5O_{12}$, un alliage lithium-germanium ou bien un mélange de plusieurs de ces matériaux d'insertion du lithium, tel qu'un mélange comprenant du graphite et un composé à base de silicium.
Comme mentionné ci-dessus, entre l'électrode négative et l'électrode positive, est disposé un électrolyte, qui va permettre le déplacement d'ions (issus généralement d'un sel métallique présent dans l'électrolyte) de l'électrode positive vers l'électrode négative lors d'une charge et inversement lors d'une décharge.
Cet électrolyte peut se présenter sous une forme liquide et comprend, classiquement, un ou plusieurs solvants organiques (par exemple, un mélange de solvants carbonates), dans lequel est (sont) dissous un ou plusieurs sels métalliques (par exemple, un ou plusieurs sels de lithium, lorsque l'accumulateur est un accumulateur lithium-ion).
Toutefois, l'utilisation d'un électrolyte liquide présente un certain nombre d'inconvénients parmi les suivants :

- le problème de fuite de l'électrolyte liquide hors de la cellule ;
- la possibilité que l'électrolyte liquide réagisse chimiquement avec l'oxygène du matériau actif de l'électrode positive, lorsqu'un emballement thermique se produit dans la cellule comprenant cet électrolyte, pouvant ainsi générer un important volume de gaz, dont la conséquence peut être l'inflammation voire l'explosion de la cellule.

Pour contourner ces inconvénients, une alternative consiste à s'affranchir de l'utilisation d'un électrolyte liquide en le remplaçant, par exemple, par les solutions suivantes :

- un verre ou une céramique conducteurs d'ions lithium se présentant sous une forme purement solide, par exemple, une couche mince déposée par dépôt chimique en phase vapeur (CVD) telle qu'une couche en LIPON, ou une couche

d'un matériau composite comprenant une matrice polymérique, par exemple, en poly(fluorure de vinylidène), et une charge constituée d'un oxyde lithié, tel que $Li_7La_3Zr_2O_{12}$;
- un électrolyte solide polymère sec composé d'un polymère du type poly(oxyde d'éthylène) (POE) et d'un sel de lithium, par exemple, du bis(trifluorosulfonyl)imidure de lithium (LiTFSI).

Toutefois, ces différentes solutions présentent toutes, à l'heure actuelle, un certain nombre d'inconvénients.
Concernant l'utilisation de verre ou de céramique conducteurs d'ions lithium, celle-ci nécessite des techniques de mise en oeuvre ou synthèse très complexes à mettre au point dans un contexte industriel, ce qui peut s'avérer rédhibitoire pour la production à grande échelle des accumulateurs.
Concernant les électrolytes solides polymères secs, leur conductivité ionique, à température ambiante, est généralement inférieure à $10^{-5}$ $S.cm^{-1}$, alors que, pour un électrolyte liquide conventionnel, la conductivité ionique est de l'ordre de $10^{-3}$ $S.cm^{-1}$, voire $10^{-2}$ $S.cm^{-1}$ à température ambiante. De ce fait, il peut s'avérer nécessaire d'utiliser les accumulateurs comportant un électrolyte polymère sec à des températures plus élevées que la température ambiante, par exemple, une température s'échelonnant de 60 à 80°C pour favoriser la diffusion des ions lithium au sein de l'électrolyte.
Pour maîtriser les inconvénients liés à l'utilisation d'un électrolyte liquide et ceux des électrolytes solides susmentionnés, une nouvelle technologie développée et illustrée dans WO2015169835 consiste à piéger l'électrolyte liquide dans une matrice polymérique faisant partie intégrante de l'électrode positive et l'électrode négative (ces électrodes pouvant être qualifiées d'électrodes ionogels), cette technologie permettant d'obtenir à température ambiante des performances électrochimiques équivalentes à celles d'un accumulateur lithium-ion comportant un électrolyte liquide non piégé dans une matrice polymérique.
Ces électrodes sont préparées de manière classique par un procédé comprenant successivement les étapes suivantes :

- une étape de fabrication d'une encre (c'est-à-dire une dispersion liquide comprenant en suspension les ingrédients solides de l'électrode) par mélange des différents ingrédients destinés à entrer dans la constitution de l'électrode, à savoir, le matériau actif, le ou les additifs conducteurs électroniques, un (co)polymère fluoré qui permet le piégeage de l'électrolyte liquide, au moins un solvant de ce copolymère fluoré (par exemple, l'acétone), un sel de lithium, un ou plusieurs solvants d'électrolyte (tels que des solvants carbonates) pour solubiliser le sel de lithium ;
- une fois l'encre obtenue, une étape de dépôt de celle-ci, généralement, par enduction sur un support formant le collecteur de courant ;
- une étape d'évaporation du ou des solvant(s) du (co)polymère fluoré suivie éventuellement d'une étape de calandrage moyennant quoi il subsiste l'électrode spécifique.

L'étape de fabrication de l'encre, qui se produit généralement dans des mélangeurs traditionnels, tels qu'un disperseur ou un mélangeur planétaire, nécessite une proportion de solvant(s) importante, ce qui limite le pourcentage de masse solide dans l'encre. Plus spécifiquement, le pourcentage de masse solide par rapport à la masse totale de l'encre est généralement compris entre 35 et 49% massique, tandis que la masse de l'électrolyte liquide (sel + solvant(s) d'électrolyte) est compris entre 6 et 13% de la masse totale de l'encre et le ou les solvant(s) du (co)polymère fluoré est compris entre 45 et 57% de la masse totale de l'encre.
La présence d'une telle quantité de solvant(s) constitue un facteur limitant pour la mise en oeuvre d'un tel procédé, notamment au niveau industriel, car il implique de mettre en place une gestion des effluents (ici, le solvant utilisé en quantité importante) tant en termes de sécurité (en particulier, en raison du potentiel caractère inflammable du ou des solvants choisis et/ou de la toxicité du ou des solvants choisis) que d'élimination du ou des solvant(s), ce qui engendre, par ailleurs, des coûts importants de mise en oeuvre de ce procédé.
Dans ce contexte, les inventeurs se sont donc fixé pour objectif de proposer un nouveau procédé de fabrication d'un ensemble comprenant une électrode comprenant une matrice polymérique renfermant un électrolyte et un collecteur de courant, qui permet d'amoindrir voire de supprimer l'utilisation de solvant (s) et qui soit, de fait, moins coûteux et limite les inconvénients liés à l'utilisation de solvant(s). Par ailleurs, les inventeurs se sont fixé également pour objectif de mettre au point un procédé de fabrication d'un ensemble tel que défini ci-dessus, qui ne passe plus par la préparation préalable d'une encre mais par la préparation préalable d'une composition sous forme d'une pâte comprenant les ingrédients destinés à entrer dans la constitution de l'électrode, cette préparation étant rendue possible grâce à l'utilisation d'un mélangeur spécifique au cours de cette étape et dont les étapes de mise en forme et d'association avec un collecteur de courant sont réalisées de sorte à éviter un encrassement des éléments utilisés pour la mise en oeuvre desdites étapes.

## Exposé de l'invention

Pour ce faire, les inventeurs ont mis au point un procédé de fabrication d'un ensemble comprenant une première électrode plane comprenant une matrice polymérique piégeant un électrolyte et un collecteur de courant, ladite première

électrode étant déposée sur une face dudit collecteur de courant, ledit procédé comprenant les étapes suivantes :

a) une étape de préparation d'une composition comprenant les ingrédients destinés à entrer dans la constitution de la première électrode, ladite étape consistant en une introduction et un mélange des ingrédients destinés à entrer dans la constitution de l'électrode dans un mélangeur à deux vis interpénétrantes co-rotatives tournant dans un fourreau fermé, à une température inférieure à 100°C ;
b) à partir de la composition obtenue en a), une étape de formation d'une bande par passage de ladite composition à travers une filière ;
c) une étape de laminage de la bande obtenue en b), par passage de celle-ci entre un premier rouleau, dit rouleau supérieur, et un deuxième rouleau, dit rouleau inférieur, une première feuille polymérique étant interposée entre le premier rouleau et la bande et une deuxième feuille polymérique étant interposée entre le deuxième rouleau et la bande (afin d'éviter tout contact direct entre les rouleaux et la bande), la première feuille polymérique étant dissociée de la bande à l'issue de l'étape de laminage tandis que la deuxième feuille polymérique reste accolée à la bande ainsi laminée à l'issue de l'étape de laminage, moyennant quoi il résulte une bande laminée revêtue sur une face, dite face inférieure, par la deuxième feuille polymérique et dont la face opposée à la face inférieure, dite face supérieure, est libre (c'est-à-dire non revêtue) ;
d) une étape de colaminage de la bande laminée obtenue en c) avec un collecteur de courant par passage de celle-ci entre un premier rouleau, dit rouleau supérieur, et un deuxième rouleau, dit rouleau inférieur, la face inférieure de la bande étant en contact avec le deuxième rouleau *via* la deuxième feuille polymérique et la face supérieure étant en contact avec le premier rouleau *via* le collecteur de courant interposé entre le premier rouleau et la face supérieure, la deuxième feuille polymérique étant éventuellement dissociée de la bande à l'issue de l'étape de colaminage tandis que le collecteur de courant reste accolé à la face supérieure de la bande ainsi colaminée à l'issue de l'étape de colaminage, moyennant quoi il résulte l'ensemble comprenant la première électrode plane et le collecteur de courant.

Grâce à cet enchaînement d'étapes préservant notamment tout contact entre les rouleaux et la bande issue de la filière, cela permet d'éviter tout endommagement de celle-ci par lesdits rouleaux et également l'encrassement de ces derniers, ce qui permet d'envisager une mise en oeuvre continue dudit procédé.
Dans un premier temps, comme mentionné ci-dessus, le procédé de l'invention comprend une étape de préparation d'une composition comprenant les ingrédients destinés à entrer dans la constitution de l'électrode, ladite étape consistant en une introduction et un mélange des ingrédients destinés à entrer dans la constitution de l'électrode dans un mélangeur à deux vis interpénétrantes co-rotatives tournant dans un fourreau fermé, à une température inférieure à 100°C.
L'introduction des ingrédients peut être simultanée ou peut être successive et cette introduction peut être réalisée à des endroits séparés (par exemple, l'introduction des constituants solides dans une première zone d'introduction par l'intermédiaire d'une ou plusieurs entrées du mélangeur et l'introduction des constituants liquides dans une deuxième zone d'introduction par l'intermédiaire d'une ou plusieurs entrées du mélangeur), comme cela peut être le cas avec le mélangeur illustré sur la figure 1 jointe annexe, qui comporte :

- un fourreau fermé 1 ;
- deux vis interpénétrantes 3 et 5 ;
- une première zone d'introduction 7 (dite zone A) des ingrédients ;
- une deuxième zone d'introduction 9 (dite zone B) des ingrédients ; et
- une sortie 11 pour l'évacuation de la composition formée ;
- un moteur 13 relié aux vis pour engendrer leur rotation.

Grâce à l'utilisation de ce mélangeur spécifique, il est possible d'annuler la présence de solvant(s) hormis le ou les solvants présents dans l'électrolyte, par rapport à un procédé utilisant des mélangeurs classiques et donc de limiter les inconvénients liés à la gestion des effluents.
Plus spécifiquement, cette composition peut comprendre, comme ingrédients constitutifs de l'électrode :

- au moins un matériau actif d'électrode ;
- au moins un polymère destiné à entrer dans la constitution de la matrice polymérique ;
- un électrolyte ;
- éventuellement au moins un additif conducteur électronique.

Le matériau actif d'électrode est un matériau apte à insérer et désinsérer, dans sa structure, des ions métalliques, tels que des ions alcalins (par exemple, des ions lithium, lorsque l'accumulateur est un accumulateur au lithium, des ions sodium, lorsque l'accumulateur est un accumulateur au sodium, ou des ions potassium, lorsque l'accumulateur est un

accumulateur au potassium), des ions alcalino-terreux (par exemple, des ions magnésium, lorsque l'accumulateur est un accumulateur au magnésium, des ions calcium, lorsque l'accumulateur est un accumulateur au calcium), des ions métalliques (par exemple, des ions aluminium, lorsque l'accumulateur est un accumulateur aluminium-ion).

La nature du matériau actif est fonction bien entendu de sa destination, à savoir s'il est destiné à une électrode positive ou une électrode négative.

Aussi, lorsque le procédé de l'invention est destiné à la fabrication d'une électrode positive, à titre d'exemples de matériaux actifs d'électrode susceptibles d'entrer dans la constitution d'une électrode positive d'un accumulateur au lithium, il peut être fait mention :

- des chalcogénures métalliques de formule $LiMQ_2$, dans laquelle M est au moins un élément métallique choisi parmi les éléments métalliques, tels que Co, Ni, Fe, Mn, Cr, V, Al et Q est un chalcogène, tel que O ou S, les chalcogénures métalliques préférés étant ceux de formule $LiMO_2$, avec M étant tel que défini ci-dessus, tel que, de manière préférée, LiCoOz, LiNiOz, $LiNi_xCo_{1-x}O_2$ (avec 0<x<1), un matériau à base de lithium-nickel-manganèse-cobalt $LiNi_xMn_yCo_zO_2$ avec x+y+z=1 (connu également sous l'abréviation NMC), tel que $LiNi_{0,33}Mn_{0,33}Co_{0,33}O_2$, ou un matériau à base de lithium-nickel-cobalt-aluminium $LiNi_xCo_yAl_zO_2$ avec x+y+z=1 (connu également sous l'abréviation NCA), tel que $LiNi_{0,8}CO_{0,15}Al_{0,05}O_2$ ;
- des chalcogénures de structure spinelle, tels que $LiMn_2O_4$ ;
- des matériaux lithiés ou partiellement lithiés de formule $M_1M_2(JO_4)_fE_{1-f}$, dans laquelle $M_1$ est du lithium, qui peut être partiellement substitué par un autre élément alcalin à hauteur d'un taux de substitution de moins de 20%, $M_2$ est un élément métallique de transition de degré d'oxydation +2 choisi parmi Fe, Mn, Ni et les combinaisons de ceux-ci, qui peut être partiellement substitué par un ou plusieurs autres éléments métalliques additionnels de degré(s) d'oxydation(s) entre +1 et +5 à hauteur d'un taux de substitution de moins de 35%, $JO_4$ est un oxyanion dans lequel J est choisi parmi P, S, V, Si, Nb, Mo et les combinaisons de ceux-ci, E est un anion fluorure, hydroxyde ou chlorure, f est la fraction molaire de l'oxyanion $JO_4$ et est compris, généralement, entre 0,75 et 1 (incluant 0,75 et 1).

Plus spécifiquement, les matériaux lithiés ou partiellement lithiés peuvent être à base de phosphore (ce qui signifie, en d'autres termes, que l'oxyanion répond à la formule $PO_4$) et peuvent présenter une structure du type olivine ordonnée ou modifiée.

Les matériaux lithiés ou partiellement lithiés peuvent répondre à la formule spécifique $Li_{3-x}M'_yM''_{2-y}(JO_4)_3$, dans laquelle $0 \leq x \leq 3$, $0 \leq y \leq 2$, M' et M" représentent des éléments métalliques identiques ou différents, l'un au moins des M' et M" étant un élément métallique de transition, $JO_4$ est, de préférence, $PO_4$, qui peut être partiellement substitué par un autre oxyanion avec J étant choisi parmi S, V, Si, Nb, Mo et les combinaisons de ceux-ci.

Les matériaux lithiés ou partiellement lithiés peuvent répondre à la formule $Li(Fe_xMn_{1-x})PO_4$, dans laquelle $0 \leq x \leq 1$ et, de préférence, x est égal à 1 (ce qui signifie, en d'autres termes, que le matériau correspondant est $LiFePO_4$).

Lorsque le procédé de l'invention est destiné à la fabrication d'une électrode négative, à titre d'exemples de matériaux actifs d'électrode susceptibles d'entrer dans la constitution d'une électrode négative d'un accumulateur au lithium, il peut être fait mention :

- des matériaux carbonés, tels que du carbone graphitique apte à intercaler du lithium pouvant exister, typiquement, sous forme d'une poudre, de paillettes, de fibres ou de sphères (par exemple, des microbilles de mésocarbone) ;
- des composés à base de silicium, tel qu'un carbure de silicium SiC ou un oxyde de silicium $SiO_x$;
- du lithium métallique ;
- des alliages de lithium, tels que ceux décrits dans US 6203944 et/ou WO 00/03444 ;
- des oxydes de titane lithiés, tel qu'un oxyde de formule $Li_{(4-x)}M_xTi_5O_{12}$ ou $Li_4M_yTi_{(5-y)}O_{12}$ dans laquelle x et y vont de 0 à 0,2, M représente un élément choisi parmi Na, K, Mg, Nb, Al, Ni, Co, Zr, Cr, Mn, Fe, Cu, Zn, Si et Mo, un exemple spécifique étant $Li_4Ti_5O_{12}$, ces oxydes étant des matériaux d'insertion du lithium présentant un faible niveau d'expansion physique après avoir inséré du lithium ;
- des oxydes de titane non lithiés, tel que $TiO_2$;
- des oxydes de formule $M_yTi_{(5-y)}O_{12}$ dans laquelle y va de 0 à 0,2 et M est un élément choisi parmi Na, K, Mg, Nb, Al, Ni, Co, Zr, Cr, Mn, Fe, Cu, Zn, Si et Mo ;
- des alliages lithium-germanium, tels que ceux comprenant des phases cristallines de formule $Li_{4,4}Ge$ ; ou
- d'un mélange de ceux-ci, tel qu'un mélange comprenant du graphite et un composé à base de silicium.

Le ou les polymères aptes à entrer dans la constitution de la matrice polymérique sont, avantageusement, choisis parmi les polymères gélifiants aptes à gélifier au contact de l'électrolyte et piéger ainsi l'électrolyte (l'électrode résultant formant ainsi une électrode communément appelé « électrode ionogel ») et, plus spécifiquement, peuvent être choisi(s) parmi des polymères fluorés comprenant au moins une unité répétitive issue de la polymérisation d'un monomère fluoré et, de préférence, au moins une unité répétitive issue de la polymérisation d'un monomère comprenant

au moins un groupe acide carboxylique , éventuellement sous forme d'un sel.

Il s'entend que la ou les unités répétitives issues de la polymérisation d'un monomère fluoré et, le cas échéant, la ou les unités répétitives issues de la polymérisation d'un monomère comprenant au moins un groupe acide carboxylique, éventuellement sous forme d'un sel, sont des unités répétitives chimiquement différentes et, en particulier, le ou les unités répétitives issues de la polymérisation d'un monomère fluoré ne comprennent pas de groupe(s) acide carboxylique, éventuellement sous forme d'un sel.

Pour les polymères gélifiants, la ou les unités répétitives issues de la polymérisation d'un monomère fluoré peuvent être, plus spécifiquement, une ou des unités répétitives issues de la polymérisation d'un ou plusieurs monomères éthyléniques comprenant au moins un atome de fluor et éventuellement un ou plusieurs autres atomes d'halogène des exemples de monomères de ce type étant les suivants :

- des perfluorooléfines en $C_2$-$C_8$, telles que le tétrafluoroéthylène, l'hexafluoropropène (connu également sous l'abréviation HFP) ;
- des fluorooléfines hydrogénées en $C_2$-$C_8$, telles que le fluorure de vinylidène, le fluorure de vinyle, le 1,2-difluoroéthylène et le trifluoroéthylène ;
- des perfluoroalkyléthylènes de formule $CH_2$=$CHR^1$, dans laquelle $R^1$ est un groupe perfluoroalkyle en Ci-Ce;
- des fluorooléfines en $C_2$-$C_6$ comportant un ou plusieurs autres atomes d'halogène (tels que du chlore, du brome, de l'iode), telles que du chlorotrifluoroéthylène ;
- des (per)fluoroalkylvinyléthers de formule $CF_2$=$CFOR^2$, dans laquelle $R^2$ est un groupe fluoro- ou perfluoroalkyle en Ci-Ce, tel que $CF_3$, $C_2F_5$, $C_3F_7$ ;
- des monomères de formule $CF_2$=$CFOR^3$, dans laquelle $R^3$ est un groupe alkyle en $C_1$-$C_{12}$, un groupe alcoxy en $C_1$-$C_{12}$ ou un groupe (per)fluoroalcoxy en $C_1$-$C_{12}$, tel qu'un groupe perfluoro-2-propoxypropyle ; et/ou
- des monomères de formule $CF_2$=$CFOCF_2OR^4$, dans laquelle $R^4$ est un groupe fluoro- ou perfluoroalkyle en Ci-Ce, tel que $CF_2$, $C_2F_5$, $C_3F_7$ ou un groupe fluoro- ou perfluoroalcoxy en $C_{1-}C_6$, tel que -$C_2F_5$-O-$CF_3$.

Plus particulièrement, le ou les polymères gélifiants peuvent comprendre, comme unité(s) répétitive(s) issue(s) de la polymérisation d'un monomère fluoré, une unité répétitive issue de la polymérisation d'un monomère de la catégorie des perfluorooléfines en $C_2$-$C_8$, telles que l'hexafluoropropène et une unité répétitive issue de la polymérisation d'un monomère de la catégorie des fluorooléfines hydrogénées en $C_2$-$C_8$, telles que le fluorure de vinylidène.

Le ou les unités répétitives issues de la polymérisation d'un monomère comprenant au moins un groupe acide carboxylique, éventuellement sous forme d'un sel peuvent être, plus spécifiquement, une ou des unités répétitives issues de la polymérisation d'un monomère de formule (I) suivante :

[Chem. 1]

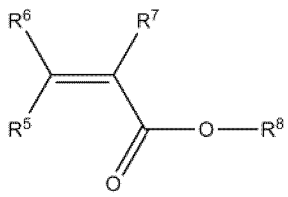

(I)

dans laquelle $R^5$ à $R^7$ représentent, indépendamment l'un de l'autre, un atome d'hydrogène ou un groupe alkyle en $C_1$-$C_3$ et $R^8$ représente un atome d'hydrogène, un cation monovalent (par exemple, un cation alcalin, un cation ammonium) ou un groupe hydrocarboné, saturé ou insaturé, en $C_1$-$C_5$ comprenant au moins un groupe acide carboxylique, des exemples particuliers de monomères de ce type étant l'acide acrylique, l'acide méthacrylique ou encore l'acrylate de 2-carboxyéthyle.

Des polymères gélifiants particuliers utilisables dans le cadre de l'invention peuvent être des polymères comprenant une unité répétitive issue de la polymérisation du fluorure de vinylidène, une unité répétitive issue de la polymérisation d'un monomère comprenant au moins un groupe acide carboxylique, tel que l'acide acrylique et éventuellement une unité répétitive issue de la polymérisation d'un monomère fluoré différent du fluorure de vinylidène (et plus spécifiquement, une unité répétitive issue de la polymérisation de l'hexafluoropropène).

Plus particulièrement encore, des polymères gélifiants utilisables dans le cadre de l'invention sont des polymères gélifiants, dont les unités répétitives susmentionnées sont issues de la polymérisation :

- d'au moins 70% en moles d'une fluorooléfine hydrogénée en $C_2$-$C_8$, de préférence, le fluorure de vinylidène ;
- de 0,1 à 15% en moles d'une perfluorooléfine en $C_2$-$C_8$, de préférence, l'hexafluoropropène ; et
- de 0,01 à 20% en moles d'un monomère de formule (I) susmentionnée, de préférence, l'acide acrylique.

Par ailleurs, le ou les polymères gélifiants présentent, avantageusement, une viscosité intrinsèque mesurée à 25°C dans le N,N-diméthylformamide allant de 0,1 à 1,0 L/g, de préférence, de 0,25 à 0,45 L/g.
Plus spécifiquement, la viscosité intrinsèque est déterminée par l'équation ci-dessous basée sur la durée de chute, à 25°C, d'une solution obtenue par dissolution du polymère concerné dans un solvant (le N,N-diméthylformamide) à une concentration d'environ 0,2 g/dL en utilisant un viscosimètre Ubbelhode :

[Math 1]

$$[\eta] = \frac{\eta_{sp} + (\Gamma \times \ln \eta_r)}{(1+\Gamma) \times c}$$

dans laquelle :

- $\eta$ correspond à la viscosité intrinsèque (en dL/g) ;
- c correspond à la concentration en polymère (en g/dL) ;
- $\eta_r$ correspond à la viscosité relative, c'est-à-dire le rapport entre la durée de chute de la solution et la durée de chute du solvant ;
- $\eta_{sp}$ correspond à la viscosité spécifique, c'est-à-dire $\eta_r$ -1 ;
- $\Gamma$ correspond à un facteur expérimental fixé à 3 pour le polymère concerné.

L'électrolyte est, avantageusement, un électrolyte liquide et, plus spécifiquement un électrolyte liquide, qui peut gélifier au contact de la matrice polymérique, lorsque celle-ci comprend un ou plusieurs polymères gélifiants.
L'électrolyte liquide peut comprendre (voire est constitué de) au moins un solvant organique, au moins un sel métallique et éventuellement un additif appartenant à la catégorie des composés carbonatés (étant entendu que cet additif est différent du ou des solvants carbonates compris, le cas échéant, dans l'électrolyte).
Le ou les solvants organiques peuvent être des solvants carbonates et, plus spécifiquement :

- des solvants carbonates cycliques, tel que le carbonate d'éthylène (symbolisé par l'abréviation EC), le carbone de propylène (symbolisé par l'abréviation PC), le carbonate de butylène, le carbonate de vinylène, le carbonate de fluoroéthylène, le carbonate de fluoropropylène et les mélanges de ceux-ci ;
- des solvants carbonates linéaires, tels que le carbonate de diéthyle (symbolisé par l'abréviation DEC), le carbonate de diméthyle (symbolisé par l'abréviation DMC), le carbonate d'éthylméthyle (symbolisé par l'abréviation EMC) et les mélanges de ceux-ci.

Le ou les solvants organiques peuvent être également des solvants esters (tels que le propionate d'éthyle, le propionate de n-propyle), des solvants nitriles (tels que l'acétonitrile) ou des solvants éthers (tels que le diméthyléther, le 1,2-diméthoxyéthane).
Le ou les solvants organiques peuvent être également des liquides ioniques, c'est-à-dire, classiquement, des composés formés par la combinaison d'un cation chargé positivement et d'un anion chargé négativement, qui est à l'état liquide à des températures inférieures à 100°C sous pression atmosphérique.
Plus spécifiquement, les liquides ioniques peuvent comprendre :

- un cation choisi parmi les cations imidazolium, pyridinium, pyrrolidinium, pipéridinium, ammonium quaternaire, phosphonium quaternaire, pyrazolium, lesdits cations étant éventuellement substitués, par exemple, par au moins un groupe alkyle comprenant de 1 à 30 atomes de carbone ;
- un anion choisi parmi les anions halogénures, les anions perfluorés, les borates.

Encore plus spécifiquement, le cation peut être choisi parmi les cations suivants :

- un cation pyrrolidinium de formule (II) suivante :

[Chem. 2]

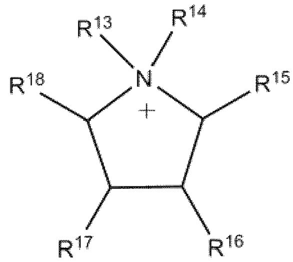

(II)

dans laquelle $R^{13}$ et $R^{14}$ représentent, indépendamment l'un de l'autre, un groupe alkyle en $C_1$-$C_8$ et $R^{15}$, $R^{16}$, $R^{17}$ et $R^{18}$ représentent, indépendamment l'un de l'autre, un atome d'hydrogène ou un groupe alkyle en $C_1$-$C_{30}$, de préférence, un groupe alkyle en $C_1$-$C_{18}$, de préférence encore, un groupe alkyle en $C_1$-$C_8$;

- un cation pipéridinium de formule (III) suivante :

[Chem. 3]

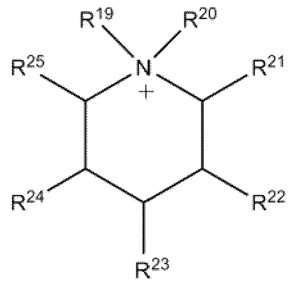

(III)

dans laquelle $R^{19}$ et $R^{20}$ représentent, indépendamment l'un de l'autre, un groupe alkyle en $C_1$-$C_8$ et $R^{21}$, $R^{22}$, $R^{23}$, $R^{24}$ et $R^{25}$ représentent, indépendamment l'un de l'autre, un atome d'hydrogène ou un groupe alkyle en $C_1$-$C_{30}$, de préférence, un groupe alkyle en $C_1$-$C_{18}$, de préférence encore, un groupe alkyle en $C_1$-$C_8$;

- un cation ammonium quaternaire ;
- un cation phosphonium quaternaire ;
- un cation imidazolium ; et
- un cation pyrazolium.

En particulier, le cation chargé positivement peut être choisi parmi les cations suivants :

- un cation pyrrolidinium de formule (II-A) suivante :

[Chem. 4]

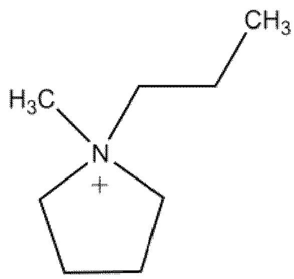

(II-A)

- un cation pipéridinium de formule (III-A) suivante :

[Chem. 5]

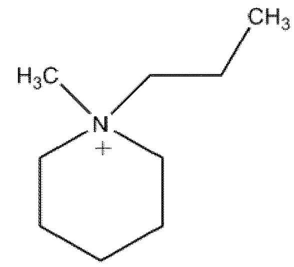

(III-A)

Quand il s'agit d'un cation ammonium quaternaire, celui-ci peut correspondre à un cation tétraalkylammonium, un cation trialkylarylammonium ou un cation tétraarylammonium, les groupes alkyles, lorsqu'ils sont présents, étant identiques ou différents et pouvant correspondre à des groupes alkyles, linéaires ou ramifiés, comprenant de 4 à 12 atomes de carbone, de préférence, de 4 à 6 atomes de carbone et les groupes aryles, lorsqu'ils sont présents, étant identiques ou différents et pouvant correspondre à un groupe phényle, un groupe benzyle ou un groupe naphtyle. Plus spécifiquement, il peut s'agir d'un cation tétraéthylammonium, un cation tétrapropylammonium, un cation tétrabutylammonium, un cation triméthylbenzylammonium, un cation méthyltributylammonium, un cation N,N-diéthyl-N-méthyl-N-(2-méthoxyéthyl)ammonium, un cation N,N-diméthyl-N-éthyl-N-(3-méthoxypropyl)ammonium, un cation N,N-diméthyl-N-éthyl-N-benzylammonium, un cation N,N-diméthyl-N-éthyl-N-phényléthyl-ammonium, un cation N-tributyl-N-méthylammonium, un cation N-triméthyl-N-butylammonium, un cation N-triméthyl-N-hexylammonium, un cation N-triméthyl-N-propylammonium.

Quand il s'agit d'un cation phosphonium quaternaire, celui-ci peut correspondre à un cation tétraalkylphosphonium, un cation trialkylarylphosphonium ou un cation tétraarylammonium, les groupes alkyles, lorsqu'ils sont présents, étant identiques ou différents et pouvant correspondre à des groupes alkyles, linéaires ou ramifiés, comprenant de 4 à 12 atomes de carbone, de préférence, de 4 à 6 atomes de carbone et les groupes aryles, lorsqu'ils sont présents, étant identiques ou différents et pouvant correspondre à un groupe phényle, un groupe benzyle ou un groupe naphtyle. Plus spécifiquement, il peut s'agir d'un cation trihexyl(tétradécyl)phosphonium, un cation tétrabutylphosphonium.

Quand il s'agit d'un cation imidazolium, il peut correspondre à un cation 1,3-diméthylimidazolium, un cation 1-(4-sulfobutyl)-3-méthylimidazolium, un cation 1-allyl-3H-imidazolium, un cation 1-butyl-3-méthylimidazolium, un cation 1-éthyl-3-méthylimidazolium, un cation 1-hexyl-3-méthylimidazolium, un cation 1-octyl-3-méthylimidazolium.

De manière spécifique, l'anion chargé négativement peut être choisi parmi :

- le 4,5-dicyano-2-(trifluorométhyl)imidazole (connu sous l'abréviation TDI) ;
- le bis(fluorosulfonyl)imidure (connu sous l'abréviation FSI) ;
- le bis(trifluorométhylsulfonyl)imidure de formule $(SO_2CF_3)_2N^-$;
- l'hexafluorophosphate de formule $PF_6^-$;
- le tétrafluoroborate de formule $BF_4^-$;
- l'oxaloborate de formule (IV) suivante :

[Chem. 6]

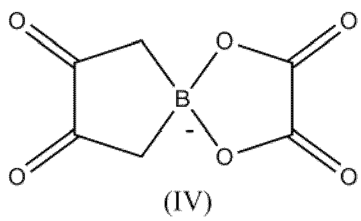

(IV)

Un liquide ionique spécifique et utilisable selon l'invention peut être un liquide ionique composé d'un cation de formule (II-A) telle que définie ci-dessus et un anion de formule $(SO_2CF_3)_2N^-$, $PF_6^-$ ou $BF_4^-$.

Le ou les sels métalliques peuvent être choisis parmi les sels de formules suivantes : MeI, $Me(PF_6)_n$, $Me(BF_4)n$, $Me(ClO_4)_n$, $Me(bis(oxalato)borate)_n$ (pouvant être désigné par l'abréviation $Me(BOB)_n$), $MeCF_3SO_3$, $Me[N(FSO_2)_2]_n$, $Me[N(CF_3SO_2)_2]_n$, $Me[N(C_2F_5SO_2)_2]_n$, $Me[N(CF_3SO_2)(R_FSO_2)]_n$, dans laquelle $R_F$ est un groupe $-C_2F_5$, $-C_4F_9$ ou $-CF_3OCF_2CF_3$, $Me(AsF_6)_n$, $Me[C(CF_3SO_2)_3]_n$, $Me_2S_n$, $Me(C_6F_3N_4)$ ($C_6F_3N_4$ correspondant à du 4,5-dicyano-2-(trifluorométhyl)imidazole et, lorsque Me est Li, le sel correspond à du 4,5-dicyano-2-(trifluorométhyl)imidazole de lithium, ce sel étant connus sous l'abréviation LiTDI), dans lesquelles Me est un élément métallique et, de préférence, un élément de transition métallique, un élément alcalin ou un élément alcalino-terreux et, de préférence encore, Me est Li (notamment, lorsque l'accumulateur de l'invention est un accumulateur lithium-ion ou lithium-air), Na (notamment, lorsque l'accumulateur est un accumulateur sodium-ion), K (notamment, lorsque l'accumulateur est un accumulateur potassium-ion), Mg (notamment, lorsque l'accumulateur est un accumulateur Mg-ion), Ca (notamment, lorsque l'accumulateur est un accumulateur calcium-ion) et Al (notamment, lorsque l'accumulateur est un accumulateur aluminium-ion) et n correspond au degré de valence de l'élément métallique (typiquement, 1, 2 ou 3).

Lorsque Me est Li, le sel est, de préférence, $LiPF_6$.

La concentration du sel métallique dans l'électrolyte liquide est, avantageusement, d'au moins 0,01 M, de préférence d'au moins 0,025 M et, de préférence encore, d'au moins 0,05 M et, avantageusement, d'au plus 5 M, de préférence, d'au plus 2 M et, de préférence encore, d'au plus, 1 M.

En outre, l'électrolyte liquide peut comprendre au moins un additif appartenant à la catégorie des composés carbonatés (étant entendu que cet additif est différent du ou des solvants carbonates compris, le cas échéant, dans l'électrolyte), tel que du carbonate de vinylène ou du carbonate de fluoroéthylène, cet additif étant compris dans l'électrolyte à une teneur ne dépassant pas 5% massique de la masse totale de l'électrolyte.

Un électrolyte liquide pouvant être utilisé, notamment lorsque l'électrode fabriquée selon le procédé de l'invention est destinée à un accumulateur lithium-ion, est un électrolyte comprenant un mélange de solvants carbonates (par exemple, un mélange de solvants carbonates cycliques, tel qu'un mélange de carbonate d'éthylène et de carbonate de propylène ou un mélange de solvants carbonates cycliques et de solvant(s) carbonate(s) linéaire(s), tel qu'un mélange de carbonate d'éthylène, de carbonate de propylène et de carbonate de diméthyle), un sel de lithium, par exemple, $LiPF_6$ (par exemple, 1M) et éventuellement un additif, tel que du carbonate de vinylène, du carbonate de fluoroéthylène.

Comme mentionné ci-dessus, la composition peut contenir au moins un additif conducteur électronique, c'est-à-dire un additif susceptible de conférer à l'électrode, dans laquelle il est incorporé, une conductivité électronique, cet additif pouvant être, par exemple, choisi parmi des matériaux carbonés tels que le noir de carbone, les nanotubes de carbone, les fibres de carbone (en particulier, les fibres de carbone obtenues en phase vapeur connues sous l'abréviation VGCF), du graphite sous forme de poudre, les fibres de graphite, du graphène et les mélanges de ceux-ci.

En outre, la composition peut comprendre au moins un solvant (hormis, le cas échéant, le ou les éventuels solvants organiques de l'électrolyte) du ou des polymères destinés à entrer dans la constitution de la matrice polymérique, ce solvant pouvant être un solvant de la famille des cétones (telles que l'acétone), lorsque le ou les polymères sont choisis dans la famille des polymères fluorés comprenant au moins une unité répétitive issue de la polymérisation d'un monomère fluoré et, de préférence, au moins une unité répétitive issue de la polymérisation d'un monomère comprenant au moins un groupe acide carboxylique, éventuellement sous forme d'un sel. Grâce à l'utilisation du mélangeur spécifique, ce ou ces solvant(s) peuvent être utilisés en quantité moindre par rapport à un procédé impliquant l'utilisation d'un mélangeur traditionnel.

Dans le cas où la composition comprend au moins un solvant tel que mentionné ci-dessus, le procédé comprend, avantageusement, après l'étape de préparation, une étape d'évaporation, par exemple, sélective, du ou des solvants du ou des polymères destinés à entrer dans la constitution de la matrice polymérique, par exemple, par un séchage en ligne par évaporation sélective.

L'étape de préparation est réalisée à une température inférieure à 100°C, de préférence, à une température inférieure à 80°C et, encore plus préférablement, à une température inférieure à 70°C et, de préférence, à une température supérieure ou égale à 5°C, de préférence encore, supérieure ou égale à 10°C, et encore plus préférablement, supérieure ou égale à 15°C.

Plus spécifiquement, l'étape de préparation peut être réalisée à température ambiante (c'est-à-dire la température de l'environnement, dans lequel se déroule l'étape de préparation, sans apport de chaleur par un quelconque élément de chauffage, par exemple, une température allant de 15 à 35°C, et plus spécifiquement, une température égale à 25°C) ou peut être réalisée à une température supérieure à la température ambiante, par exemple, une température supérieure à la température ambiante mais inférieure à 100°C . Plus spécifiquement, l'étape de préparation peut être réalisée à une température supérieure à la température ambiante mais inférieure à la température d'ébullition du ou des solvants du ou des polymères destinés à entrer dans la constitution de la matrice polymérique, lorsque ce ou ces solvants sont présents dans la composition ou lorsque ce ou ces solvants ne sont pas présents, à une température supérieure à la température ambiante mais inférieure à la température de fusion du ou des polymères destinés à entrer dans la constitution de la matrice polymérique (étant entendu que la température, à laquelle est réalisée l'étape de préparation, est toujours inférieure à 100°C).

L'étape de préparation permet d'obtenir une composition sous forme de pâte homogène et présentant une viscosité dynamique très importante, et plus spécifiquement, une viscosité dynamique supérieure à 5 000 Pa.s, de préférence supérieure à 6 000 Pa.s et, de préférence encore supérieure à 7 000 Pa.s, mesurée à un gradient de cisaillement de 0,1 $s^{-1}$ et à température ambiante.

On précise que, par température ambiante, il s'entend la température de l'environnement, dans lequel se déroule la mesure de viscosité dynamique, sans apport de chaleur par un quelconque élément de chauffage, par exemple, une température allant de 15 à 35°C, telle que, par exemple, une température égale à 25°C.

Plus spécifiquement, la viscosité dynamique de la composition est mesurée avec un rhéomètre Bohlin CVO de la marque Malvern équipé d'un support Peltier et d'un mobile cône-plan de diamètre 40 mm et d'angle 4°. Pour ce faire, la composition est déposée entre le support Peltier et le mobile à un entrefer de 150 $\mu$m. Le cas échéant, lorsque la composition comprend au moins un solvant du ou des polymères constitutifs de la matrice polymérique, une trappe à solvant(s) est ajoutée au système pour éviter l'évaporation trop rapide du ou des solvants. La mesure est réalisée en mode viscosimétrie à un gradient de cisaillement de 0,1 $s^{-1}$ et à température ambiante sur un temps d'intégration de 5 secondes.

Par ailleurs, la composition sous forme de pâte présente, en général, une viscosité dynamique ne dépassant pas 20 000 Pa.s, de préférence, ne dépassant pas 18 000 Pa.s, dans les conditions telles que définies ci-dessus (à savoir, à un gradient de cisaillement de 0,1 $s^{-1}$ et à température ambiante). Des résultats très avantageux ont été obtenus, lorsque la composition se présente sous forme de pâte ayant une viscosité dynamique allant de 7 000 à 12 000 Pa.s dans les conditions définies ci-dessus (à savoir, à un gradient de cisaillement de 0,1 $s^{-1}$ et à température ambiante).

Un aspect particulièrement avantageux de cette étape de préparation réside, en effet, dans sa capacité à permettre la préparation d'une composition de formation d'électrode ayant une viscosité dynamique très élevée, ce qui permet de minimiser l'utilisation d'électrolyte liquide et/ou de solvants organiques. Ceci est un avantage par rapport aux techniques bien établies de fabrication d'électrodes à partir d'encres fabriquées à partir de mélangeurs traditionnels du type disperseur ou mélangeur planétaire, qui présentent une viscosité dynamique inférieure à 5 000 Pa.s, voire même inférieure à 1 000 Pa.s mesurée dans les conditions mentionnées ci-dessus.

Lorsque les compositions comprennent au moins un solvant du ou des polymères destinés à entrer dans la constitution de la matrice polymérique, ces compositions peuvent comprendre, à l'issue de l'étape de préparation, de 50 à 80% de masse solide par rapport à la masse totale de la composition.

Plus spécifiquement, lorsque les compositions comprennent, comme ingrédients constitutifs, au moins un matériau actif d'électrode, au moins un polymère destiné à entrer dans la constitution de la matrice polymérique, un électrolyte et éventuellement au moins un additif conducteur électronique et au moins un solvant du ou des polymères, les compositions obtenues à l'issue de cette étape de préparation présentent, avantageusement, un pourcentage de masse solide par rapport à la masse totale de la composition pouvant aller de 50 à 80 % (contre 35 à 49 % avec des procédés impliquant des mélangeurs traditionnels). Par ailleurs, ces compositions peuvent comprendre une masse d'électrolyte à hauteur de 6 à 11% de la masse totale de la composition et une masse du ou des solvants du ou des polymères à hauteur de 11 à 42% de la masse totale de la composition (contre 45 à 57 % avec des procédés impliquant des mélangeurs traditionnels).

Selon un mode particulier et avantageux de réalisation, la composition peut être dénuée de solvant(s) du ou des polymères destinés à entrer dans la constitution de la matrice polymérique. Dans ces conditions, les compositions peuvent comprendre, à l'issue de l'étape de préparation, de 83 à 90% de masse solide par rapport à la masse totale de la composition.

Les compositions peuvent comprendre, à l'issue de l'étape de préparation, de 83 à 90% de masse solide par rapport à la masse totale de la composition.

Plus spécifiquement, lorsque les compositions comprennent, comme ingrédients constitutifs, au moins un matériau actif d'électrode, au moins un polymère destiné à entrer dans la constitution de la matrice polymérique, un électrolyte et éventuellement au moins un additif conducteur électronique mais sont dénuées de solvant(s) du ou des polymères, le pourcentage de masse solide peut représenter de 83 à 90% de la masse totale de la composition et la masse d'électrolyte peut représenter de 10 et 17% de la masse totale de la composition.

Dans ces conditions, l'étape d'évaporation du solvant mentionnée plus haut n'est pas nécessaire.

L'étape de préparation peut être réalisée de manière continue, c'est-à-dire que l'introduction des ingrédients et le mélange de ceux-ci dans le mélangeur spécifique s'effectue de manière continue, c'est-à-dire pendant toute la durée de sa mise en oeuvre du procédé.

Après la préparation de la composition, celle-ci est soumise, à la sortie du mélangeur, à une étape de formation d'une bande par passage de ladite composition à travers une filière, telle qu'une filière plate ou cylindrique (par exemple, à section circulaire ou oblongue). De préférence, la filière est une filière plate, c'est-à-dire une filière dont la section finale est rectangulaire, cette section pouvant présenter, avantageusement, une hauteur (qui va conférer l'épaisseur à la bande à la sortie de la filière) allant de 100 $\mu$m à 2 000 $\mu$m, de préférence, allant de 300 $\mu$m à 1500 $\mu$m et, de préférence encore allant de 500 $\mu$m à 1 000 $\mu$m. La section présente une largeur, qui sera fonction de la largeur de bande souhaitée et donc de la largeur finale de l'électrode, en tenant compte de l'étalement de la bande non seulement sur la longueur mais sur la largeur induisant une augmentation de la largeur de la bande, qui peut être d'un facteur 2, 3 voire 4 selon l'épaisseur initiale de la bande issue de l'étape b).

La filière est, avantageusement, directement connectée à la sortie du mélangeur.

A titre d'exemple, la figure 2 illustre schématiquement cette étape de formation de bande *via* le passage de la

composition obtenue à l'issue de l'étape a) dans une filière, les éléments illustrés sur cette figure étant les suivants :

- l'extrémité 15 du mélangeur par laquelle sort la composition ainsi formée ;
- une filière plate 17, dans laquelle est introduite la composition issue du mélangeur ;
- une bande 19 résultant de la mise en forme de la composition au sein de la filière 17.

La bande ainsi formée, est soumise, ensuite, à une étape de laminage ou autrement dit, une étape de réduction de son épaisseur par passage de celle-ci entre un premier rouleau, dit rouleau supérieur, et un deuxième rouleau, dit rouleau inférieur, une première feuille polymérique étant interposée entre le premier rouleau et la bande et une deuxième feuille polymérique étant interposée entre le deuxième rouleau et la bande (afin d'éviter tout contact direct entre les rouleaux et la bande), la première feuille polymérique étant dissociée de la bande à l'issue de l'étape de laminage tandis que la deuxième feuille polymérique reste accolée à la bande ainsi laminée à l'issue de l'étape de laminage, moyennant quoi il résulte une bande laminée revêtue sur une face, dite face inférieure, par la deuxième feuille polymérique et dont la face opposée à la face inférieure, dite face supérieure, est une face libre, c'est-à-dire une face non revêtue par un quelconque élément.

Cette étape est illustrée schématiquement sur la figure 3, comprenant les éléments suivants :

- la bande 19 issue de la filière précédemment décrite ;
- le rouleau supérieur 21 ;
- la première feuille polymérique 23 disposée entre la bande 19 et le rouleau supérieur 21;
- le rouleau inférieur 25 ;
- la deuxième feuille polymérique 27 disposée entre la bande 19 et le rouleau inférieur 25 ;

étant entendu que, comme indiqué sur la flèche indiquée sur le rouleau supérieur indiquant le sens de rotation dudit rouleau et sur la flèche indiquée sur le rouleau inférieur indiquant le sens de rotation dudit rouleau, ledit rouleau supérieur et ledit rouleau inférieur présentent des sens de rotation inverses pour induire un déplacement de la bande de la droite vers la gauche ainsi que des feuilles polymériques. Autrement dit, le rouleau supérieur présente un sens de rotation dans le sens des aiguilles d'une montre, tandis que le rouleau inférieur présente un sens de rotation dans le sens inverse des aiguilles d'une montre. A l'issue de l'étape de laminage, la bande présente une face supérieure 29 libre et une face inférieure 31 revêtue par la deuxième feuille polymérique. Dans ce qui précède et ce qui suit, il est à noter que les mêmes références numériques seront utilisées, dès lors qu'elles désignent les mêmes éléments dans un contexte identique ou similaire.

Le rouleau supérieur et le rouleau inférieur peuvent appartenir à un dispositif de type laminoir ou un dispositif de type calandreuse utilisé classiquement pour densifier les électrodes dans un procédé conventionnel de fabrication de la batterie lithium-ion.

La première feuille polymérique et la deuxième feuille polymérique peuvent être des feuilles en polyester et, plus spécifiquement, des feuilles en poly(téréphtalate d'éthylène) ou en poly(naphtalate d'éthylène), de préférence en poly(téréphtalate d'éthylène).

Avantageusement, la première feuille polymérique et la deuxième feuille polymérique peuvent être de même nature.

Avantageusement, la première feuille polymérique et/ou la deuxième feuille polymérique présente(nt) au moins une face rugueuse, en particulier, la face destinée à être en contact avec la bande. Plus spécifiquement, la première feuille polymérique et/ou la deuxième feuille polymérique peuve(nt) présenter une rugosité moyenne de surface, dite Ra, allant de 0,01 μm à 1 μm, de préférence encore, allant de 0,3 μm à 0,7 μm, ces valeurs étant particulièrement adaptées, lorsque l'électrode associée est une électrode négative et, plus particulièrement encore, lorsque l'électrode associée est une électrode négative comprenant, comme matériau actif, du graphite.

La rugosité moyenne de surface Ra, pouvant être dénommée également rugosité moyenne arithmétique, désigne la rugosité moyenne de la surface pour la longueur de la mesure effectuée, c'est-à-dire l'écart moyen entre les pics et les creux, moyennant quoi plus la rugosité de la surface concernée est importante, plus les pics et les creux de cette dernière auront un écart important.

La rugosité moyenne de surface Ra est déterminée, classiquement, au moyen d'un profilomètre de contact, par exemple, un profilomètre Dektak 150 avec une pointe de rayon 12,5 μm de la marque Bruker.

Par ailleurs, la première feuille polymérique et/ou la deuxième feuille polymérique présente(nt), avantageusement, une épaisseur allant de 6 μm à 75 μm, de préférence, de 10 μm à 30 μm.

A titre d'exemples de feuilles répondant aux critères de rugosité et d'épaisseur susmentionnés, il peut être fait mention des feuilles en poly(téréphtalate d'éthylène) fournies par la compagnie Mitsubishi Polyester Film GmbH sous les références PET HOSTAPHAN™ MK, ces feuilles présentant une épaisseur de 12 μm, 19 μm ou 23 μm et de rugosité Ra de 0,3 μm et PET HOSTAPHAN™ XMTK, ces feuilles présentant une épaisseur de 50 μm et de rugosité Ra de 0,68 μm.

En particulier, pour atteindre le niveau de rugosité requis, la première feuille polymérique et/ou la deuxième feuille polymérique peu(ven)t être une feuille multicouche comprenant une couche centrale en polyester et sur au moins une des faces de la couche centrale, une couche comprenant une matrice polymérique, par exemple, une matrice polymérique en polyester piégeant des particules inorganiques, telles que des particules de silice. Des feuilles de ce type sont celles mentionnées ci-dessus sous la référence PET HOSTAPHAN™ MK.

Qui plus est, la première feuille polymérique et/ou la deuxième feuille polymérique présente(nt), avantageusement, une énergie de surface inférieure à 40 mN/m, cette caractéristique d'énergie de surface étant particulièrement adaptée lorsque l'électrode associée est une électrode négative et, plus particulièrement encore, lorsque l'électrode associée est une électrode négative comprenant, comme matériau actif, du graphite.

L'énergie de surface peut être déterminée - comme connu en soi - par mesure de l'angle de contact d'une goutte d'un liquide déposée sur la feuille polymérique selon la méthode d'Owens-Wendt. Par exemple, elle peut être mesurée à l'aide d'un tensiomètre, tel qu'un tensiomètre commercialisé par la société KRUSS sous la référence DSA100™. En particulier, trois liquides de polarité différente et de composantes polaire et dispersive connues, à savoir l'eau, le diiodométhane et le glycérol, peuvent être utilisés pour cette mesure.

Encore plus spécifiquement, lorsque l'électrode est une électrode négative comprenant, comme matériau actif, du graphite, la première feuille polymérique et/ou la deuxième feuille polymérique présente(nt), avantageusement, une énergie de surface inférieure à l'énergie de surface de l'électrode négative, cette dernière ayant une énergie de surface inférieure au collecteur de courant associée à l'électrode.

L'étape de laminage peut être réalisée à chaud et, plus spécifiquement, à une température allant de 60°C à 120°C, de préférence encore, allant de 80°C à 110°C, cette température pouvant être atteinte par chauffage du rouleau inférieur et du rouleau supérieur.

Que ce soient pour la première feuille polymérique et la deuxième feuille polymérique, celles-ci peuvent être fournies par un rouleau distributeur située en amont du rouleau supérieur pour la première feuille polymérique et un rouleau distributeur située en amont du rouleau inférieur pour la deuxième feuille polymérique.

A l'issue de cette étape et, le cas échéant une fois obtenu le refroidissement de la bande, la première feuille polymérique est dissociée de la bande, c'est-à-dire qu'elle ne reste pas accolée à celle-ci, cette dissociation étant effectuée, avantageusement *via* un rouleau d'entraînement (référence 33 sur la figure 4 similaire à la figure 3 si ce n'est la présence de ce rouleau d'entrainement) situé en aval du rouleau supérieur, de préférence, à une distance prédéterminée, et positionné sur la première feuille polymérique et la bande et *via* un rouleau enrouleur situé en aval du rouleau supérieur et du rouleau d'entraînement et en position surélevée par rapport à ceux-ci et relié à une extrémité de la première feuille polymérique, la rotation du rouleau enrouleur entraînant le déplacement de la feuille polymérique en direction du rouleau d'entrainement et ensuite, un enroulement de celle-ci autour du rouleau enrouleur. Plus spécifiquement, le rouleau d'entraînement est positionné à une distance prédéterminée définie en fonction de la durée nécessaire pour refroidir la bande avant le retrait de la première feuille polymérique pour éviter ainsi que celle-ci reste collée au rouleau. A titre d'exemple, pour une température de laminage de 80°C et une vitesse de ligne de 1 m/min, la distance prédéterminée doit être supérieure à 20 cm.

Après l'étape de laminage, le procédé comprend une étape de colaminage de la bande laminée obtenue en c) avec un collecteur de courant par passage de celle-ci entre un premier rouleau, dit rouleau supérieur, et un deuxième rouleau, dit rouleau inférieur, la face inférieure de la bande étant en contact avec le deuxième rouleau *via* la deuxième feuille polymérique et la face supérieure, dite face libre, de la bande étant en contact avec le premier rouleau *via* le collecteur de courant interposé entre le premier rouleau et la face supérieure, la deuxième feuille polymérique étant, éventuellement, dissociée de la bande à l'issue de l'étape de colaminage, tandis que le collecteur de courant reste accolé à la face supérieure de la bande ainsi colaminée à l'issue de l'étape de colaminage, moyennant quoi il résulte l'ensemble comprenant la première électrode plane et le collecteur de courant.

Cette étape est illustrée schématiquement sur la figure 5, comprenant les éléments suivants :

- la bande 19 issue de l'étape de laminage précédemment décrite ;
- le rouleau supérieur 35 ;
- le collecteur de courant 37 disposé entre la bande 19 et le rouleau supérieur 35 ;
- le rouleau inférieur 39 ;
- la deuxième feuille polymérique 27 disposée entre la bande 19 et le rouleau inférieur 39 ;

étant entendu que, comme indiqué sur la flèche indiquée sur le rouleau supérieur indiquant le sens de rotation dudit rouleau et sur la flèche indiquée sur le rouleau inférieur indiquant le sens de rotation dudit rouleau, ledit rouleau supérieur et ledit rouleau inférieur présentent un sens de rotation inverse pour induire un déplacement de la bande de la droite vers la gauche ainsi que la deuxième feuille polymérique et le collecteur de courant. Autrement dit, le rouleau supérieur présente un sens de rotation dans le sens des aiguilles d'une montre, tandis que le rouleau inférieur présente un sens de rotation dans le sens inverse des aiguilles d'une montre.

Au même titre que pour l'étape de laminage, le rouleau supérieur et le rouleau inférieur peuvent appartenir à un dispositif de type laminoir ou un dispositif de type calandreuse utilisée classiquement pour densifier les électrodes dans un procédé conventionnel de fabrication de la batterie lithium-ion.

L'étape de colaminage peut être réalisée à chaud et, plus spécifiquement, à une température allant de 60°C à 120°C, de préférence encore, allant de 80°C à 110°C, cette température pouvant être atteinte par chauffage du rouleau inférieur et du rouleau supérieur.

A l'issue de cette étape et, le cas échéant une fois obtenu le refroidissement de la bande, la deuxième feuille polymérique peut être dissociée de la bande, c'est-à-dire qu'elle ne reste pas accolée à la face inférieure de celle-ci, cette dissociation étant effectuée, avantageusement *via* un rouleau d'entraînement (référence 41 sur la figure 6 similaire à la figure 5 si ce n'est la présence en plus de ce rouleau d'entrainement) situé en aval du rouleau inférieur, de préférence, à une distance prédéterminée, et positionné sur la deuxième feuille polymérique et la bande et *via* un rouleau enrouleur situé en aval du rouleau inférieur et du rouleau d'entraînement et en position détachée par rapport à ceux-ci et relié à une extrémité de la deuxième feuille polymérique, la rotation du rouleau enrouleur entraînant le déplacement de la feuille polymérique en direction du rouleau d'entrainement et ensuite, un enroulement de celle-ci autour du rouleau enrouleur. Plus spécifiquement, le rouleau d'entraînement est positionné à une distance prédéterminée définie en fonction de la durée nécessaire pour refroidir la bande avant le retrait de la deuxième feuille polymérique pour éviter ainsi que celle-ci reste collée au rouleau. A titre d'exemple, pour une température de laminage de 80°C et une vitesse de ligne de 1 m/min, la distance prédéterminée doit être supérieure à 20 cm. A l'issue de cette étape de colaminage, la bande est ainsi revêtue sur la face supérieure par un collecteur de courant et présente une face inférieure libre, lorsque la deuxième feuille polymérique a été dissociée.

Concernant le collecteur de courant, il peut être fourni par un rouleau distributeur situé en amont du rouleau supérieur pour le collecteur de courant.

Le collecteur de courant peut être, classiquement, un collecteur de courant se présentant sous forme d'une feuille métallique et, plus spécifiquement, une feuille en aluminium, lorsque l'électrode préparée est une électrode positive, ou une feuille en cuivre, en nickel ou en cuivre nickelé, lorsque l'électrode préparée est une électrode négative.

Avantageusement, le collecteur de courant peut se présenter sous forme d'une feuille métallique, dont au moins la face (à savoir, la face inférieure du collecteur du courant) destinée à être en contact avec la bande est modifiée pour améliorer l'adhésion de la bande sur le collecteur de courant, cette modification pouvant consister en un traitement de surface, par exemple, un traitement conduisant à la formation d'une couche de particules en surface, par exemple, des particules pouvant être en carbone conducteur de l'électricité , tel que du graphite, du graphène, des nanotubes de carbone, du carbone activé, des nanofibres de carbone non activées ; des particules métalliques, par exemple, sous formes de poudre, de fibres ou de flocons ; des particules d'oxyde(s) métallique(s) ou des particules polymériques conductrices de l'électricité. La modification peut consister également en un traitement de surface choisi parmi l'ablation ou la corrosion.

A titre d'exemple, un collecteur de courant particulier est un collecteur en aluminium traité chimiquement en surface, connu sous la référence SDX™-ZM du fabricant Showa Denko.

Avantageusement, le procédé de l'invention est un procédé continu, c'est-à-dire un procédé pour lequel, durant toute la durée de sa mise en oeuvre, il n'y a pas d'interruption entre l'étape a), l'étape b), l'étape c) et l'étape d).

Plus spécifiquement, le procédé de fabrication peut être un procédé continu, c'est-à-dire un procédé qui se déroule sans interruption pendant toute la durée de sa mise en oeuvre, ce qui signifie, en d'autres termes, que l'ensemble est fabriqué sans interruption pendant toute la durée de mise en oeuvre du procédé. Autrement dit, cela signifie que les étapes a) à d) sont mises en oeuvre concomitamment et sans interruption pendant toute la durée du procédé, ce qui signifie, en d'autres termes, qu'à chaque instant t de la durée du procédé, une fraction de la composition est soumise à l'étape de fabrication tandis qu'une autre fraction de la composition est soumise à l'étape de formation de la bande, qu'une fraction de la bande est soumise à l'étape de laminage et qu'un autre fraction de la bande est soumise à l'étape de colaminage. Il s'entend également, dans ce cas, que toutes les étapes facultatives du procédé (par exemple, l'étape de séchage) sont, lorsqu'elles sont présentes, mises en oeuvre de façon continue.

Différentes variantes de mise en oeuvre d'un procédé continu conforme à l'invention sont illustrées sur les figures 7, 8, 9 et 10 jointes en annexe. Pour ces différentes figures, les références numériques identiques à celles utilisées pour les figures précédentes désignent les mêmes éléments et ne feront pas l'objet systématique d'une description, lorsqu'elles ont fait déjà l'objet d'une description par ailleurs.

La figure 7 représente une première variante de mise en oeuvre du procédé continu. Plus spécifiquement, la bande 19 est formée en sortie du fourreau 1 du mélangeur à deux vis interpénétrantes co-rotatives en utilisant une filière plate 17. L'épaisseur de la bande est ensuite réduite par laminage entre un rouleau supérieur 21 et un rouleau inférieur 25 d'un premier laminoir, une première feuille polymérique 23 étant intercalée entre le rouleau supérieur 21 et la bande 19, la première feuille polymérique étant fournie *via* un rouleau dérouleur 43 et une deuxième feuille polymérique 27 étant intercalée entre la bande 19 et le rouleau inférieur 25, ladite deuxième feuille étant fournie *via* un rouleau dérouleur 45. A l'issue du laminage, la première feuille polymérique est dissociée de la bande *via* un rouleau d'entraînement 33 situé en

aval du rouleau supérieur à une distance prédéterminée et positionné sur la première feuille polymérique accolée à la bande et *via* un rouleau enrouleur 47 situé en aval du rouleau supérieur et du rouleau d'entraînement 33 et en position surélevée par rapport à ceux-ci et relié à une extrémité de la première feuille polymérique. La distance prédéterminée est fonction de la température des rouleaux susmentionnés et la vitesse de laminage. La bande issue du laminage est ensuite acheminée dans le sens de déplacement de la flèche indiquée sur la figure vers un deuxième laminoir pour un colaminage avec un collecteur de courant, ce colaminage consistant à faire transiter la bande entre un rouleau supérieur 35 et un rouleau inférieur 39, le collecteur de courant 37 étant intercalé entre le rouleau supérieur 35 et la bande 19, le collecteur de courant étant fourni *via* un rouleau dérouleur 49. A l'issue du colaminage, la deuxième feuille polymérique est dissociée de la bande *via* un rouleau d'entraînement 41 situé en aval du rouleau inférieur 39 positionné à une distance prédéterminée et positionné sur la deuxième feuille polymérique accolée à la bande et *via* un rouleau enrouleur 51 situé en aval du rouleau inférieur et du rouleau d'entraînement et étant détaché de la bande et relié à une extrémité de la deuxième feuille polymérique. La distance prédéterminée est fonction de la température des rouleaux susmentionnés et la vitesse de colaminage. A l'issue du colaminage, la bande revêtue du collecteur de courant et débarrassée de la deuxième feuille polymérique est enroulée sur un rouleau enrouleur 53.

Pour agir sur la tension de la bande 19 et de la première feuille polymérique et de la deuxième feuille polymérique, un ou plusieurs rouleaux d'entraînement mobiles peuvent être ajoutés, ce qui permet de mieux maîtriser cette tension et d'assurer un meilleur alignement entre la bande et les feuilles polymériques, ces variantes de mise en oeuvre, respectivement deuxième, troisième et quatrième variante, étant illustrées sur les figures 8, 9 et 10 avec :

- pour la figure 8, un rouleau d'entrainement mobile 55 en contact avec le collecteur de courant et positionné entre le rouleau supérieur 35 et le rouleau enrouleur 53, les autres éléments étant identiques à ceux de la figure 7 et étant désignés par les mêmes références numériques ;
- pour la figure 9, en sus du rouleau d'entrainement mobile 55 de la figure 8, un autre rouleau d'entrainement mobile 57 en contact avec la deuxième feuille polymérique positionné entre le rouleau inférieur 25 du premier laminoir et le rouleau inférieur 39 du deuxième laminoir, les autres éléments étant identiques à ceux de la figure 7 et de la figure 8 et étant désignés par les mêmes références numériques ;
- pour la figure 10, en sus du rouleau d'entrainement mobile 55 et l'autre rouleau d'entrainement mobile 57, un autre rouleau d'entrainement mobile 59 en contact avec la bande 19 en aval de l'autre rouleau d'entrainement mobile 57 et en amont du rouleau supérieur 35 du deuxième laminoir.

Le procédé de l'invention est également approprié à la préparation d'une électrode biface, autrement dit dans le contexte de l'invention à un ensemble comprenant une première électrode déposée sur une première face du collecteur de courant et une deuxième électrode déposée sur une deuxième face du collecteur de courant, ce procédé pouvant adopter plusieurs variantes de réalisation.

Selon une première variante de réalisation, le procédé en sus des étapes déjà décrites comprend les particularités suivantes :

- pour l'étape d) susmentionnée, la deuxième feuille polymérique n'est pas dissociée de la bande ;
- après l'étape d), une étape de colaminage e) de l'ensemble issu de l'étape d) avec une autre bande, dite deuxième bande, comprenant une matrice polymérique piégeant un électrolyte, ladite deuxième bande étant revêtue sur sa face supérieure par une feuille polymérique, dite troisième feuille polymérique, par passage dudit ensemble et de la deuxième bande entre un rouleau supérieur et un rouleau inférieur, le rouleau inférieur étant en contact avec la deuxième feuille polymérique de l'ensemble susmentionné et, entre le rouleau supérieur et le collecteur de courant de l'ensemble, est interposée la bande revêtue sur sa face supérieure par une feuille polymérique, dite troisième feuille polymérique, ladite troisième feuille polymérique étant en contact direct avec le rouleau supérieur ;
- après l'étape e), une étape de dissociation de la deuxième feuille polymérique et une étape de dissociation de la troisième feuille polymérique, moyennant quoi il résulte l'ensemble comprenant une première électrode déposée sur une première face du collecteur de courant et une deuxième électrode déposée sur une deuxième face du collecteur de courant.

Cette variante est illustrée sur la figure 11 qui détaille l'étape de colaminage e) et les étapes de dissociation subséquentes avec les éléments suivants :

- la bande 19, dite première bande, revêtue sur sa face inférieure par la deuxième feuille polymérique 27 et sur sa face supérieure par le collecteur courant 37 ;
- un rouleau supérieur 61 et un rouleau inférieur 63 ;
- une deuxième bande 65 revêtue sur sa face supérieure d'une feuille polymérique 67, dite troisième feuille polymérique, et ayant sa face inférieure libre ;

- le rouleau inférieur 63 étant en contact avec la deuxième feuille polymérique 27 et le rouleau supérieur 61 étant en contact avec la troisième feuille polymérique 67, la première bande 19 et la deuxième bande 65 étant mises en contact en passant entre le rouleau supérieur 61 et le rouleau inférieur 63, ce qui signifie, autrement dit, que la première bande 19 et la deuxième bande 65 sont mises en contact *via* le collecteur de courant revêtant la première bande 19 et via la face inférieure libre 66 de la deuxième bande ;
- en aval du rouleau supérieur 61, un rouleau d'entraînement 69 en contact avec la troisième feuille polymérique 67 revêtant la face supérieure de la deuxième bande 65 et en aval de ce rouleau d'entraînement 69, un rouleau enrouleur 71 relié à une extrémité de la troisième feuille polymérique et en position surélevée par rapport au rouleau d'entrainement 69, moyennant quoi la troisième feuille polymérique 67 est, d'une part, entraînée et, d'autre part, détachée de la deuxième bande ;
- en aval du rouleau inférieur 63, un rouleau d'entraînement 73 en contact avec la deuxième feuille polymérique 27 revêtant la face inférieure de la première bande 19 et en aval de ce rouleau d'entraînement, un rouleau enrouleur 75 relié à une extrémité de la deuxième feuille polymérique 27 et en position détachée de la deuxième bande par rapport au rouleau d'entrainement 73, moyennant quoi la deuxième feuille polymérique est, d'une part, entraînée et d'autre part, détachée de la deuxième bande ;
- un rouleau enrouleur 77 lié à une extrémité de l'ensemble comprenant la première bande (laquelle constitue la première électrode) déposée sur une première face du collecteur de courant et la deuxième bande (laquelle constitue la deuxième électrode) déposée sur une deuxième face du collecteur de courant.

La figure 12 illustre une variante similaire à celle illustrée sur la figure 11, si ce n'est qu'un rouleau d'entraînement mobile 79 est interposé entre le rouleau supérieur 61 et le rouleau d'entrainement 69 pour agir sur la tension de bande.

La deuxième bande peut être réalisée, jusqu'à l'étape de colaminage e), selon des étapes a), b) et c) telles que définies dans le cadre du procédé de l'invention.

Selon une deuxième variante de réalisation, le procédé comprend les particularités suivantes :

- lors de l'étape d), la face supérieure de la bande, dite première bande, est en contact avec le premier rouleau *via* le collecteur de courant lui-même en contact avec la face libre d'une autre bande, dite deuxième bande, comprenant une matrice polymérique piégeant un électrolyte, ladite deuxième bande étant revêtue sur une autre face par une feuille polymérique, dite troisième feuille polymérique. Autrement dit, entre le premier rouleau et la face supérieure de la bande sont interposés, dans la direction allant du premier rouleau vers la face supérieure de la première bande, la troisième feuille polymérique déposée sur la deuxième bande, la deuxième bande et le collecteur de courant.

La deuxième bande, jusqu'à l'étape de colaminage d), peut être réalisée par un procédé conforme à l'invention comprenant les étapes a), b) et c).

Cette variante est illustrée sur la figure 13 qui détaille la réalisation concomitante des deux bandes jusqu'à la mise en contact de celles-ci *via* le collecteur de courant avec, plus spécifiquement, les parties encadrées a) et a') représentant schématiquement l'étape de laminage de la première bande (partie a)) et l'étape de laminage de la deuxième bande (partie a')). Pour chacune de ces parties, des références similaires sont utilisées si possible, si ce n'est qu'elles diffèrent par l'apposition d'un signe ' pour les références de la partie a').

Pour chacune des parties a) et a'), la bande (19 ou 19') est formée en sortie du fourreau (1 ou 1') du mélangeur à deux vis interpénétrantes co-rotatives en utilisant une filière plate (17 ou 17'). L'épaisseur de la bande est ensuite réduite par laminage entre un rouleau supérieur (21 ou 21') et un rouleau inférieur (25 ou 25') d'un premier laminoir, une première feuille polymérique (23 ou 23') étant intercalée entre le rouleau supérieur 21 et la bande 19 pour la partie a) et entre le rouleau inférieur 25' et la bande 19' pour la partie a'), la première feuille polymérique étant fournie *via* un rouleau dérouleur (43 ou 43') et une deuxième feuille polymérique (27 ou 27') étant intercalée entre la bande 19 et le rouleau inférieur 25 pour la partie a) et entre le rouleau supérieur 21' et la bande 19' pour la partie a'), ladite deuxième feuille étant fournie *via* un rouleau dérouleur (45 ou 45'). A l'issue du laminage, la première feuille polymérique est dissociée de la bande *via* deux rouleaux d'entraînement 33 et 34 ou 33' et 34' situés en aval du rouleau supérieur 21 pour la partie a) ou du rouleau inférieur 25' pour la partie a') et positionnés sur la première feuille polymérique accolée à la bande et *via* un rouleau enrouleur 47 ou 47' situé en aval du rouleau supérieur pour la partie a) et du rouleau inférieur pour la partie a') et des rouleaux d'entraînement 33 et 34 ou 33' et 34' et en position détachée par rapport à ceux-ci et reliés à une extrémité de la première feuille polymérique concernée.

Sur cette figure 13, la partie b) illustre l'étape de colaminage commune aux deux bandes laminées, par passage de celles-ci, entre un rouleau supérieur 35 et un rouleau inférieur 39 et interposition entre elles, du collecteur de courant 37 fourni au moyen d'un rouleau dérouleur 49, les deux bandes étant acheminées vers le deuxième laminoir au moyen des deux rouleaux d'entrainement 55 et 55'. En aval du rouleau supérieur et du rouleau inférieur, les deuxièmes feuilles polymériques sont détachées des bandes grâce aux rouleaux d'entrainement respectifs 41 et 41' et aux rouleaux enrouleurs 51 et 51' reliés à une extrémité desdites bandes.

L'ensemble résultant ainsi formé est acheminé *via* un rouleau d'entrainement 55 pour être enroulé et stocké dans un rouleau enrouleur 53'.

En variante, toujours dans l'optique de réaliser un ensemble électrode-collecteur de courant, dont l'électrode comprend une matrice polymérique piégeant un électrolyte, la présente invention a également trait à un procédé de fabrication d'un ensemble comprenant une première électrode plane comprenant une matrice polymérique piégeant un électrolyte et un collecteur de courant, ledit procédé comprenant les étapes suivantes :

a) une étape de préparation d'une composition comprenant les ingrédients destinés à entrer dans la constitution de la première électrode, ladite étape consistant en une introduction et un mélange des ingrédients destinés à entrer dans la constitution de l'électrode dans un mélangeur à deux vis interpénétrantes co-rotatives tournant dans un fourreau fermé, à une température inférieure à 100°C ;

b) à partir de la composition obtenue en a), une étape de formation d'une bande par passage de ladite composition à travers une filière ;

c') une étape de colaminage de la bande obtenue en b), par passage de celle-ci entre un premier rouleau, dit rouleau supérieur, et un deuxième rouleau, dit rouleau inférieur, une feuille polymérique présentant une rugosité moyenne de surface de surface, dite Ra, allant de 0,01 $\mu$m à 1 $\mu$m étant interposée entre le premier rouleau et la bande et un collecteur de courant étant interposée entre le deuxième rouleau et la bande afin d'éviter tout contact direct entre les rouleaux et la bande, la feuille polymérique étant dissociée de la bande à l'issue de l'étape de colaminage tandis que le collecteur de courant reste accolée à la bande à l'issue de l'étape de colaminage, moyennant quoi il résulte l'ensemble comprenant la première électrode plane et le collecteur de courant.

Cette variante de procédé est illustrée sur la figure 14. Sur cette figure, la bande 19 issue de la filière plate (non représentée) est colaminée entre un rouleau supérieur 81 et un rouleau inférieur 83 d'un laminoir, une feuille polymérique 85 étant intercalée entre la bande 19 et le rouleau supérieur 81 et un collecteur de courant 87 étant intercalé entre la bande 19 et le rouleau inférieur 83. En aval des rouleaux, la feuille polymérique 85 est dissociée de la bande *via* un rouleau d'entraînement 89 positionné en aval du rouleau supérieur sur la feuille polymérique elle-même positionnée sur la bande.

Cette variante de procédé est également appropriée à la préparation d'une électrode biface, autrement dans le contexte de l'invention à un ensemble comprenant une première électrode déposée sur une première face du collecteur de courant et une deuxième électrode déposée sur une deuxième face opposée à ladite première face dudit collecteur de courant

Les caractéristiques relatives aux étapes a) et b), à la feuille polymérique et au collecteur de courant déjà décrites plus haut sont également valables pour cette variante.

Dans ce cas, l'étape c') de colaminage peut être définie comme une étape de colaminage de la bande obtenue en b), par passage de celle-ci entre un premier rouleau, dit rouleau supérieur, et un deuxième rouleau, dit rouleau inférieur ;

une feuille polymérique étant interposée entre le premier rouleau et la bande, dite première bande, laquelle est en contact, *via* sa face inférieure, avec un collecteur de courant ; et

entre le deuxième rouleau et la bande sont interposés ledit collecteur de courant en contact, via sa face inférieure avec une autre bande, dit deuxième bande, comprenant une matrice polymérique piégeant un électrolyte, cette deuxième bande étant en contact *via* sa face inférieure avec une autre feuille polymérique,

la feuille polymérique étant dissociée de la première bande et l'autre feuille polymérique étant dissociée de la deuxième bande à l'issue de l'étape de colaminage, moyennant quoi il résulte l'ensemble susmentionné.

Avant l'étape de colaminage, la deuxième bande peut être réalisée par un procédé comprenant les étapes a) et b) susmentionnées.

Cette variante est illustrée sur la figure 15 avec l'étape de colaminage commune à la première bande 19 et la deuxième bande 19' issues chacune d'un passage à travers une filière plate (17 et 17') d'une composition obtenue à partir d'un mélangeur (1 et 1'), ladite première bande et ladite deuxième bande étant soumises à un passage dans un laminoir entre un rouleau supérieur 81 et un rouleau inférieur 83 et interposition entre elles, du collecteur de courant 87 fourni au moyen d'un rouleau dérouleur 49', ladite première bande étant en contact avec le rouleau supérieur *via* une feuille polymérique 85 fournie par un rouleau dérouleur 43 et la deuxième bande étant en contact avec le rouleau inférieur *via* une feuille polymérique 85' fournie par un rouleau dérouleur 43'. En aval du rouleau supérieur et du rouleau inférieur, les feuilles polymériques sont détachées des bandes concernées grâce aux rouleaux d'entrainement respectifs 33 et 33' et aux rouleaux enrouleurs 47 et 47' reliées à une extrémité desdites feuilles. L'ensemble résultant est acheminé et stocké sur un rouleau enrouleur 53.

L'invention va maintenant être décrite à la lumière des exemples donnés ci-dessous donnés à titre illustratif et non limitatif.

**Brève description des figures**

[Fig. 1] est un schéma représentant un mélangeur utilisable pour la mise en oeuvre du procédé de l'invention.
[Fig. 2] est un schéma illustrant l'étape de formation de bande *via* le passage de la composition obtenue à l'issue de l'étape a) dans une filière.
[Fig. 3] est un schéma illustrant l'étape de laminage du procédé de l'invention.
[Fig. 4] est un schéma illustrant l'étape de laminage du procédé de l'invention avec une spécificité supplémentaire.
[Fig. 5] est un schéma illustrant l'étape de colaminage du procédé de l'invention.
[Fig. 6] est un schéma illustrant l'étape de colaminage du procédé de l'invention avec une spécificité supplémentaire.
[Fig. 7] est un schéma illustrant une première variante de la mise en oeuvre du procédé continu de l'invention.
[Fig. 8] est un schéma illustrant une deuxième variante de la mise en oeuvre du procédé continu de l'invention.
[Fig. 9] est un schéma illustrant une troisième variante de la mise en oeuvre du procédé continu de l'invention.
[Fig. 10] est un schéma illustrant une quatrième variante de la mise en oeuvre du procédé continu de l'invention.
[Fig. 11] est un schéma illustrant la mise en oeuvre du procédé continu de l'invention pour la réalisation d'une électrode biface selon une première variante de réalisation.
[Fig. 12] est un schéma illustrant la mise en oeuvre du procédé continu de l'invention pour la réalisation d'une électrode biface selon une première variante de réalisation avec une spécificité supplémentaire.
[Fig. 13] est un schéma illustrant la mise en oeuvre du procédé continu de l'invention pour la réalisation d'une électrode biface selon une deuxième variante de réalisation.
[Fig. 14] est un schéma illustrant la mise en oeuvre d'une nouvelle forme du procédé de l'invention.
[Fig. 15] est un schéma illustrant la mise en oeuvre de cette nouvelle forme du procédé de l'invention pour la réalisation continue d'une électrode biface.

**Exposé détaillé de modes de réalisation particuliers**

<u>EXEMPLE 1</u>

Dans l'exemple qui suit, les ingrédients suivants sont utilisés :

*Polymère-1 : copolymère VDF-AA (0,9% par moles)-HFP (2,4% par moles) ayant une viscosité intrinsèque de 0,28 L/g dans le diméthylformamide (DMF) à 25°C et une température de fusion de 148°C, VDF correspondant au fluorure de vinylidène et AA correspondant à l'acide acrylique ;
*Polymère-2 : copolymère VDF-HFP (2,5% par moles)-HEA (0,4% par moles) ayant une viscosité intrinsèque de 0,117 L/g dans le DMF à 25°C et une température de fusion de 154,2°C, VDF correspondant au fluorure de vinylidène et HFP correspondant à l'hexafluoropropène ;
*Polymère (F-1) : copolymère VDF-AA (0,5% par moles)-HFP (6,5% par moles) ayant une viscosité intrinsèque de 0,32 L/g dans le diméthylformamide (DMF) à 25°C et une température de fusion de 127°C, VDF correspondant au fluorure de vinylidène et AA correspondant à l'acide acrylique ;
*Conducteur électronique (CE1) : noir de carbone Super™ C65 commercialisé par IMERIS ;
*Conducteur électronique (CE2) : fibres de carbone VGCF™-H commercialisées par SHOWA DENKO ;
*Graphite : 75% SMG-N-HE1 (Hitachi Chemical Co., Ltd.) / 25% TIMREX™ SFG6;
*Matériau de cathode NMC622 : HX12th commercialisé par UMICORE ;
*Milieu liquide (L1) : carbonate d'éthylène (EC) / carbonate de propylène (PC) (1:1) contenant $LiPF_6$ 1M et 2% de carbonate de vinylène (VC) ;
*TSPI : 3-(triéthoxysilyl)propyl isocyanate ;
*DBTDL : dilaurate de dibutylétain ; et
*TEOS : tétraéthoxysilane $Si(OC_2H_5)_4$.

Dans un premier temps, il est préparé une électrode négative déposée sur un collecteur de courant conformément au procédé de l'invention.
Pour ce faire, les composants suivants, dans les proportions reportées ci-dessous, sont introduits dans un mélangeur à deux vis interpénétrantes co-rotatives de diamètre 24 mm du fabriquant Thermofisher (référence TSE24) :

Graphite : proportion massique de 69,35%.
Polymère (F-1) : proportion massique de 3,65%.
Milieu liquide (L1) : proportion massique de 27%.

Le mélange des composants est réalisé à une température inférieure à 100°C avec une vitesse de rotation des vis de 300 tours par minute et un débit massique totale de 4,5 Kg/h. Une bande continue est formée en sortie du mélangeur en utilisant une filière plate de fente 600 μm. Dès la sortie de la filière, la bande continue est passée entre les rouleaux d'un laminoir du fabriquant INGECAL, dont le diamètre des rouleaux fait 150 mm, à 80°C et entre un film PET HOSTAPHAN™ MK d'épaisseur 23 μm acheminé par le rouleau supérieur et un collecteur de courant en cuivre d'épaisseur 10 μm acheminé par le rouleau inférieur, la vitesse de ligne étant comprise entre 3,5 et 4,5 m/min et la fente entre les rouleaux étant réglée à 100 μm. L'électrode négative ionogel ainsi réalisée à une épaisseur finale de 115 μm et un grammage total de 19,2 $mg/cm^2$ (comprenant l'électrolyte), ce qui représente une capacité surfacique de 4,7 $mAh/cm^2$.

Dans un deuxième temps, il est préparé une électrode positive selon le procédé suivant. Une solution de polymère-1 dans l'acétone est préparée à 40°C et ensuite refroidie à température ambiante. Ensuite, 96,9% en proportion massique de NMC622, 2,1% en proportion massique de conducteur électronique CE1 et 1% massique de conducteur électronique CE2 ont été ajoutés à la solution de polymère-1 en respectant une proportion massique de 96/4 (matière active + conducteurs/polymère-2). Par la suite, le milieu liquide (L1) est ajouté au mélange en proportion massique $[m_{L1}/(m_{L1} + m_{polymer-1})]$ x 100 de 75,2%.

Le mélange est ensuite enduit à une épaisseur constante sur un collecteur de courant Al de 20 μm d'épaisseur en utilisant une machine d'enduction roll-to-roll de type comma bar. Le solvant est ensuite évaporé en ligne à une température inférieure à 70°C, produisant ainsi l'électrode positive ionogel. L'électrode est finalement calandrée pour atteindre une épaisseur finale de 118 μm. Le grammage total de l'électrode est de 28,4 $mg/cm^2$ (comprenant l'électrolyte), ce qui représente une capacité surfacique de 4,2 $mAh/cm^2$.

Dans un troisième temps, il est préparé une membrane selon le procédé suivant. Le polymère-2 (40 g) est dissous dans 275 g d'acétone à 60°C donnant ainsi une solution contenant 12,7% en proportion massique du poymère-2. Du DBTDL (0,21 g) est ajouté et la solution est homogénéisée à 60°C. Du TSPI (0,82 g) est ensuite ajouté. La quantité de DBTDL est calculée pour être en proportion molaire de 10% par rapport au TSPI. La quantité de TSPI est elle-même calculée pour être en proportion molaire de 0,55% par rapport au polymère-2. La solution est maintenue à 60°C pendant 90 min le temps que les groupes fonctionnels isocyanates réagissent avec les groupes hydroxyles du polymère-2.

Ensuite, le milieu liquide (L1) est ajouté à la solution en proportion massique $[m_{L1}/(m_{L1} + m_{polymer-2})]$ x 100 de 80%. Après homogénéisation à 60°C, l'acide formique est ajouté suivi du TEOS. La quantité de TEOS est calculée en respectant la proportion massique $(m_{(SiO2)}/m_{(polymer-2)})$ de 10 %. La quantité d'acide formique est calculée à partir de l'équation : $n_{(formic\ acid)}/n_{(TEOS)} = 2,6$.

Tous les ingrédients ont été introduits dans le mélange de solution sous atmosphère argon.

Le mélange est ensuite enduit à une épaisseur constante sur un substrat PET en utilisant une machine d'enduction roll-to-roll de type comma bar. Le solvant est ensuite évaporé en ligne à une température inférieure à 70°C, produisant ainsi la membrane. L'épaisseur de la membrane ainsi produite est de 45 μm.

Enfin, il est procédé à la préparation de trois cellules souples du type « *Pouch Cell* » à partir des éléments fabriqués ci-dessus. Plus spécifiquement, trois cellules souples ont été assemblées en utilisant une électrode négative ionogel selon l'invention de l'exemple 1, caractérisé par un grammage de 19,2 $mg/cm^2$, soit une capacité surfacique de 4,7 $mAh/cm^2$, une électrode positive ionogel caractérisé par un grammage de 28,4 $mg/cm^2$, soit une capacité surfacique de 4,2 $mAh/cm^2$, et une membrane comme décrit précédemment.

La surface active de l'électrode négative ionogel est de 12,25 $cm^2$ et celle de l'électrode positive ionogel est de 10,24 $cm^2$.

Les valeurs de capacité de décharge pour ces trois cellules ont été déterminées à différents régimes de décharge. Les résultats sont reportés dans le tableau ci-dessous, les trois cellules étant dénommées respectivement Cellule 1, Cellule 2 et Cellule 3.

[Table 1]

| Conditions de cyclage | | | Capacité de décharge (mAh) | | |
|---|---|---|---|---|---|
| T °C | Régime | Numéro de l'essai | Cellule 1 | Cellule 2 | Cellule 3 |
| 22 | C/20- D/20 | 0 | 39,18 | 38,81 | 39,02 |
| 22 | | 1 | 38,51 | 38,16 | 38,33 |
| 22 | | 2 | 37,44 | 37,09 | 37,26 |

(suite)

| Conditions de cyclage | | | Capacité de décharge (mAh) | | |
|---|---|---|---|---|---|
| T °C | Régime | Numéro de l'essai | Cellule 1 | Cellule 2 | Cellule 3 |
| 22 | C/10 - D/10 | 3 | 37,11 | 36,79 | 36,73 |
| 22 | | 4 | 35,41 | 35,36 | 34,93 |
| 22 | | 5 | 35,11 | 35,17 | 34,65 |
| 22 | | 6 | 34,87 | 35,06 | 34,45 |
| 22 | | 7 | 34,57 | 34,88 | 34,16 |
| 22 | C/5- D/5 | 8 | 31,00 | 32,34 | 30,45 |
| 22 | | 9 | 30,71 | 32,23 | 30,19 |
| 22 | | 10 | 30,42 | 32,14 | 30,00 |
| 22 | | 11 | 30,07 | 32,00 | 29,73 |
| 22 | | 12 | 29,79 | 31,92 | 29,43 |
| 22 | C/5- D/2 | 13 | 24,45 | 28,68 | 24,31 |
| 22 | | 14 | 24,43 | 28,74 | 24,47 |
| 22 | | 15 | 23,86 | 28,32 | 24,33 |
| 22 | | 16 | 23,48 | 28,30 | 23,66 |
| 22 | | 17 | 23,23 | 28,16 | 23,29 |
| 22 | C/5- D | 18 | 9,94 | 14,41 | 8,93 |
| 22 | | 19 | 9,79 | 14,50 | 8,60 |
| 22 | | 20 | 9,71 | 14,50 | 8,58 |
| 22 | | 21 | 9,56 | 14,53 | 8,52 |
| 22 | | 22 | 9,68 | 14,30 | 8,49 |
| 22 | C/5- 2D | 23 | 2,73 | 5,04 | 2,65 |
| 22 | | 24 | 2,75 | 4,96 | 2,79 |
| 22 | | 25 | 2,73 | 4,96 | 2,81 |
| 22 | | 26 | 2,71 | 4,98 | 2,84 |
| 22 | | 27 | 2,73 | 5,00 | 2,87 |
| 22 | C/20- D/20 | 28 | 34,23 | 35,20 | 34,37 |
| 22 | | 29 | 34,14 | 35,18 | 34,03 |
| 22 | | 30 | 33,97 | 35,09 | 33,66 |
| 22 | | 31 | 33,79 | 34,97 | 33,30 |
| 22 | | 32 | 33,60 | 34,84 | 33,08 |
| 22 | | 33 | 39,18 | 38,81 | 39,02 |
| 22 | | 34 | 38,51 | 38,16 | 38,33 |

Il est clair, au regard des résultats ci-dessus, que les cellules fonctionnent correctement et que les valeurs sont répétables.

EXEMPLE 2

Cet exemple est un essai visant à optimiser les caractéristiques des feuilles polymériques utilisées en fonction de l'électrode et, notamment en termes de rugosité et d'énergie de surface.

En effet, dans le contexte de l'invention, pour pouvoir retirer, de manière optimale, une feuille polymérique sans

décoller la bande d'électrode de son collecteur, il a été déterminé, dans cet exemple, les caractéristiques optimales de cette feuille polymérique et, plus particulièrement, d'une feuille polymérique en poly(téréphtalte d'éthylène).

Dans un premier temps, pour une bande d'électrode à base de graphite similaire à celle définie à l'exemple 1 ci-dessus, il a testé différentes feuilles polymériques en poly(téréphtalate d'éthylène) présentant des rugosités différentes, pour déterminer, de manière optimale, une gamme de rugosités compatible avec l'étape de laminage et l'étape de colaminage. Il ressort, de ces tests, que des feuilles particulièrement compatibles pour ces étapes avec une bande d'électrode à base de graphite sont des feuilles présentant une rugosité moyenne de surface (Ra) élevée et, plus spécifiquement, entre 0,01 μm et 1 μm et, plus avantageusement entre 0,3 μm et 0,7 μm.

En revanche, les feuilles polymériques en poly(téréphtalate d'éthylène) de faible rugosité (et, plus particulièrement, inférieure à 0,01 μm) ont tendance à rester collées à la bande d'électrode à base de graphite, laissant ainsi, à l'issue du procédé, le collecteur de courant en cuivre séparé de l'électrode.

Dans un deuxième temps, avec les feuilles de rugosité élevée, des tests ont été effectués pour déterminer des gammes d'énergie de surface compatibles pour permettre un retrait simple desdites feuilles sans entraîner de décollement de la bande d'électrode du collecteur de courant. Il ressort de ces tests que l'énergie de surface de la feuille polymérique doit être, avantageusement, inférieure à l'énergie de surface de la bande d'électrode et, de préférence, doit être inférieure à 40 mN/m.

Par ailleurs, il est à noter que la bande d'électrode doit présenter, avantageusement, une énergie de surface inférieure à celle du collecteur de courant, auquel elle est associée, afin d'avoir une adhésion optimale entre eux.

Donc il peut en être déduit qu'avantageusement, l'énergie de surface du film polymérique est inférieure à l'énergie de surface de la bande d'électrode, laquelle est inférieure à l'énergie de surface du collecteur de courant.

Dans un troisième temps, avec des feuilles en PET de rugosité élevée (aux alentours de 0,30 μm) et d'énergie de surface inférieure à 40 mN/m (plus précisément, 26,7), il a été testé différentes épaisseurs (respectivement, 12, 19 et 125 μm) et l'impact de ces dernières sur les propriétés d'adhésion et de décollement des feuilles concernées. Il ressort que la feuille polymérique doit être suffisamment fine pour pouvoir être facilement retiré mais elle doit être également suffisamment épaisse pour conserver des propriétés mécaniques suffisantes pour l'étape de laminage et l'étape de colaminage. Ainsi, il en est déduit, de ces tests, qu'une feuille en PET peut présenter, avantageusement, une épaisseur allant de 6 μm à 75 μm, de préférence de 10 μm à 30 μm.

## Revendications

1. Procédé de fabrication d'un ensemble comprenant une première électrode plane comprenant une matrice polymérique piégeant un électrolyte et un collecteur de courant (37), ladite première électrode étant déposée sur une face dudit collecteur de courant, ledit procédé comprenant les étapes suivantes :

    a) une étape de préparation d'une composition comprenant les ingrédients destinés à entrer dans la constitution de la première électrode, ladite étape consistant en une introduction et un mélange des ingrédients destinés à entrer dans la constitution de l'électrode dans un mélangeur à deux vis interpénétrantes (3, 5) co-rotatives tournant dans un fourreau fermé (1), à une température inférieure à 100C ;
    b) à partir de la composition obtenue en a), une étape de formation d'une bande (19) par passage de ladite composition à travers une filière (17) ;
    c) une étape de laminage de la bande (19) obtenue en b), par passage de celle-ci entre un premier rouleau, dit rouleau supérieur (21), et un deuxième rouleau, dit rouleau inférieur (25), une première feuille polymérique (23) étant interposée entre le premier rouleau et la bande (19) et une deuxième feuille polymérique (27) étant interposée entre le deuxième rouleau et la bande (19), la première feuille polymérique (23) étant dissociée de la bande (19) à l'issue de l'étape de laminage tandis que la deuxième feuille polymérique (27) reste accolée à la bande (19) ainsi laminée à l'issue de l'étape de laminage, moyennant quoi il résulte une bande (19) laminée revêtue sur une face, dite face inférieure (31), par la deuxième feuille polymérique (27) et dont la face opposée à la face inférieure, dite face supérieure (29), est libre ;
    d) une étape de colaminage de la bande (19) laminée obtenue en c) avec un collecteur de courant (37) par passage de celle-ci entre un premier rouleau, dit rouleau supérieur (35), et un deuxième rouleau, dit rouleau inférieur (39), la face inférieure(31) de la bande (19) étant en contact avec le deuxième rouleau *via* la deuxième feuille polymérique (27) et la face supérieure (29) étant en contact avec le premier rouleau *via* le collecteur de courant (37) interposé entre le premier rouleau et la face supérieure (29), la deuxième feuille polymérique (27) étant éventuellement dissociée de la bande (19) à l'issue de l'étape de colaminage tandis que le collecteur de courant (37) reste accolé à la face supérieure (29) de la bande (19) ainsi colaminée à l'issue de l'étape de colaminage, moyennant quoi il résulte l'ensemble comprenant la première électrode plane et le collecteur de courant (37).

2. Procédé de fabrication selon la revendication 1, dans lequel la composition comprend, comme ingrédients constitutifs de l'électrode :

   - au moins un matériau actif d'électrode ;
   - au moins un polymère destiné à entrer dans la constitution de la matrice polymérique ;
   - un électrolyte ;
   - éventuellement au moins un additif conducteur électronique.

3. Procédé selon l'une quelconque des revendications 1 à 2, dans lequel la première feuille polymérique (23) et la deuxième feuille polymérique (27) sont des feuilles en polyester.

4. Procédé selon l'une quelconque des revendications 1 à 3, dans lequel la première feuille polymérique (23) et la deuxième feuille polymérique (27) sont des feuilles en poly(téréphtalate d'éthylène) ou en poly(naphtalate d'éthylène), de préférence en poly(téréphtalate d'éthylène).

5. Procédé selon l'une quelconque des revendications 1 à 4, dans lequel la première feuille polymérique (23) et la deuxième feuille polymérique (27) sont de même nature.

6. Procédé selon l'une quelconque des revendications 1 à 5, dans lequel la première feuille polymérique (23) et/ou la deuxième feuille polymérique (27) présente(nt) au moins une face rugueuse, en particulier, la face destinée à être en contact avec la bande (19).

7. Procédé selon l'une quelconque des revendications 1 à 6, dans lequel la première feuille polymérique (23) et/ou la deuxième feuille polymérique (27) présente(nt) une rugosité moyenne de surface allant de 0,01 $\mu$m à 1 $\mu$m, de préférence, allant de 0,3 $\mu$m à 0,7 $\mu$m.

8. Procédé selon l'une quelconque des revendications 1 à 7, dans lequel le collecteur de courant (37) se présente sous forme d'une feuille métallique.

9. Procédé selon l'une quelconque des revendications 1 à 8, dans lequel le collecteur de courant (37) se présente sous forme d'une feuille métallique, dont au moins la face destinée à être en contact avec la bande (19) est soumise à une modification pour améliorer l'adhésion de la bande (19) sur le collecteur de courant (37).

10. Procédé selon la revendication 9, dans lequel la modification consiste en un traitement conduisant à la formation d'une couche de particules en surface du collecteur du courant (37) ou en un traitement de surface choisi parmi l'ablation ou la corrosion.

11. Procédé selon l'une quelconque des revendications 1 à 10, qui est un procédé de préparation d'un ensemble comprenant une première électrode plane déposée sur une première face du collecteur de courant (37) et une deuxième électrode plane déposée sur une deuxième face du collecteur de courant, ladite deuxième face étant opposée à la première face, moyennant quoi :

    - pour l'étape d) susmentionnée, la deuxième feuille polymérique (27) n'est pas dissociée de la bande (19) ;
    - après l'étape d), une étape de colaminage e) de l'ensemble issu de l'étape d) avec une autre bande, dite deuxième bande (65), comprenant une matrice polymérique piégeant un électrolyte, ladite deuxième bande (65) étant revêtue sur sa face supérieure par une feuille polymérique, dite troisième feuille polymérique (67), par passage dudit ensemble et de la deuxième bande (65) entre une rouleau supérieur (61) et un rouleau inférieur (63), le rouleau inférieur (63) étant en contact avec la deuxième feuille polymérique (27) de l'ensemble susmentionné et, entre le rouleau supérieur (61) et le collecteur de courant (37) de l'ensemble, est interposée la bande (65) revêtue sur sa face supérieure par une feuille polymérique, dite troisième feuille polymérique (67), ladite troisième feuille polymérique (67) étant en contact direct avec le rouleau supérieur (61) ;
    - après l'étape e), une étape de dissociation de la deuxième feuille polymérique (27) et une étape de dissociation de la troisième feuille polymérique (67), moyennant quoi il résulte l'ensemble comprenant une première électrode déposée sur une première face du collecteur de courant (37) et une deuxième électrode déposée sur une deuxième face du collecteur de courant.

12. Procédé selon l'une quelconque des revendications 1 à 10, qui est un procédé de préparation d'un ensemble comprenant une première électrode plane déposée sur une première face du collecteur de courant (37) et une

deuxième électrode plane déposée sur une deuxième face du collecteur de courant, ladite deuxième face étant opposée à la première face, dans lequel, lors de l'étape d), la face supérieure de la bande, dite première bande (19), est en contact avec le premier rouleau *via* le collecteur de courant lui-même en contact avec la face libre d'une autre bande, dite deuxième bande (19'), comprenant une matrice polymérique piégeant un électrolyte ladite deuxième bande (19') étant revêtue sur une autre face par une feuille polymérique, dite troisième feuille polymérique.

**13.** Procédé de fabrication d'un ensemble comprenant une première électrode plane comprenant une matrice polymérique piégeant un électrolyte et un collecteur de courant (87), ledit procédé comprenant les étapes suivantes :

a) une étape de préparation d'une composition comprenant les ingrédients destinés à entrer dans la constitution de la première électrode, ladite étape consistant en une introduction et un mélange des ingrédients destinés à entrer dans la constitution de l'électrode dans un mélangeur à deux vis interpénétrantes co-rotatives tournant dans un fourreau fermé, à une température inférieure à 100°C ;
b) à partir de la composition obtenue en a), une étape de formation d'une bande (19) par passage de ladite composition à travers une filière ;
c') une étape de colaminage de la bande (19) obtenue en b), par passage de celle-ci entre un premier rouleau, dit rouleau supérieur (81), et un deuxième rouleau, dit rouleau inférieur (83), une feuille polymérique (85) présentant une rugosité moyenne de surface de surface allant de 0,01 μm à 1 μm étant interposée entre le premier rouleau et la bande (19) et un collecteur de courant (87) étant interposée entre le deuxième rouleau et la bande (19) afin d'éviter tout contact direct entre les rouleaux et la bande (19), la feuille polymérique (85) étant dissociée de la bande (19) à l'issue de l'étape de colaminage tandis que le collecteur de courant (87) reste accolée à la bande (19) à l'issue de l'étape de colaminage, moyennant quoi il résulte l'ensemble comprenant la première électrode plane et le collecteur de courant (87).

**14.** Procédé selon la revendication 13, qui est un procédé de fabrication d'un ensemble comprenant la première électrode déposée sur une première face du collecteur de courant (87) et une deuxième électrode déposée sur une deuxième face opposée à ladite première face dudit collecteur de courant, moyennant quoi l'étape c') est une étape de colaminage de la bande (19) obtenue en b), par passage de celle-ci entre un premier rouleau, dit rouleau supérieur (81), et un deuxième rouleau, dit rouleau inférieur (83) ; une feuille polymérique (85) étant interposée entre le premier rouleau et la bande, dite première bande (19), laquelle est en contact, *via* sa face inférieure, avec un collecteur de courant (87) ; et

entre le deuxième rouleau et la bande (19) sont interposés ledit collecteur de courant (87) en contact, *via* sa face inférieure avec une autre bande, dit deuxième bande (19'), cette dernière étant en contact *via* sa face inférieure avec une autre feuille polymérique (85'),
la feuille polymérique (85) étant dissociée de la première bande (19) et l'autre feuille polymérique (85') étant dissociée de la deuxième bande (19') à l'issue de l'étape de colaminage, moyennant quoi il résulte l'ensemble comprenant la première électrode déposée sur une première face du collecteur de courant (87) et une deuxième électrode déposée sur une deuxième face opposée à ladite première face dudit collecteur de courant.

**15.** Procédé selon la revendication 14, dans lequel, avant l'étape de colaminage, la deuxième bande (19') est réalisée par un procédé comprenant les étapes a) et b) telles que définies à la revendication 13.

[Fig. 1]

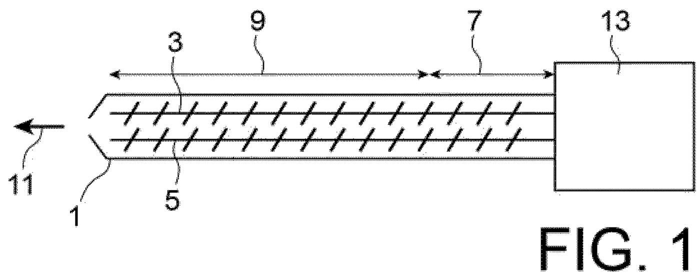


FIG. 1

[Fig. 2]

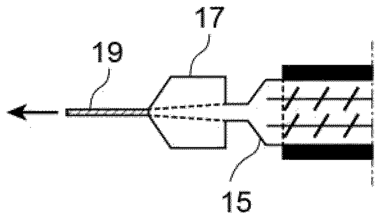


FIG. 2

[Fig. 3]

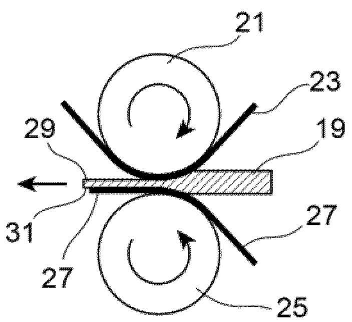


FIG. 3

[Fig. 4]

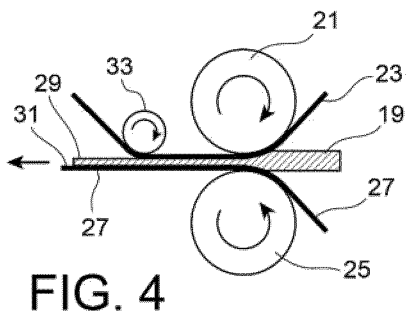


FIG. 4

[Fig. 5]

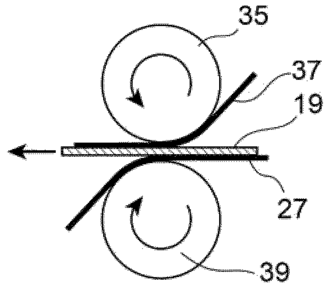


FIG. 5

[Fig. 6]

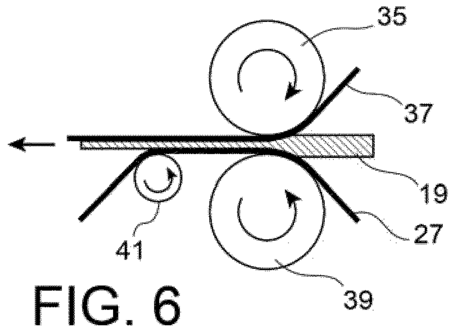


FIG. 6

[Fig. 7]

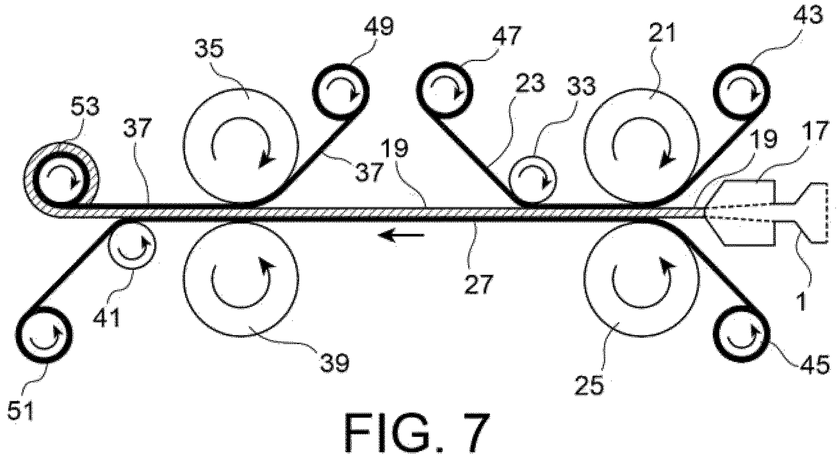


FIG. 7

[Fig. 8]

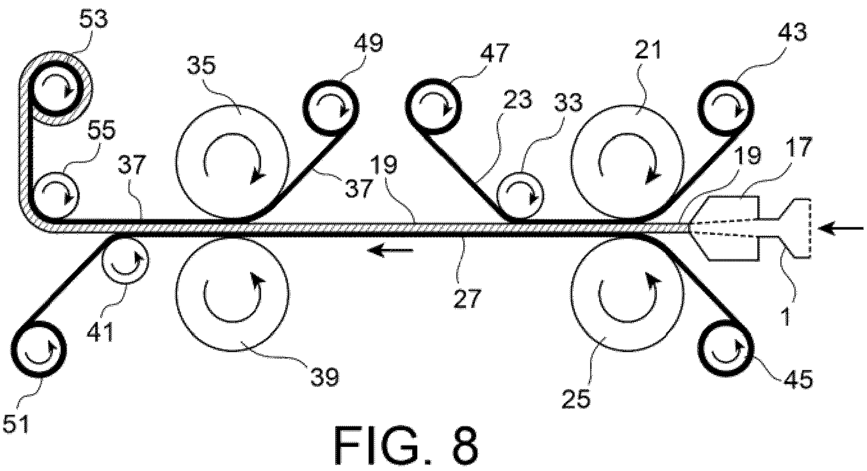


FIG. 8

[Fig. 9]

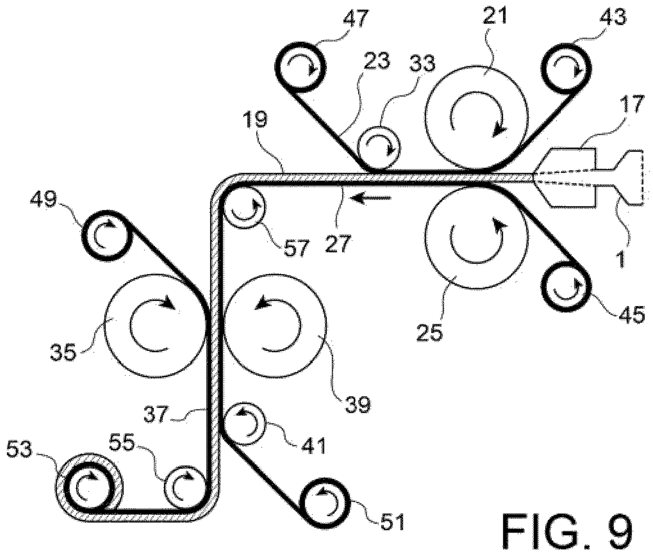


FIG. 9

[Fig. 10]

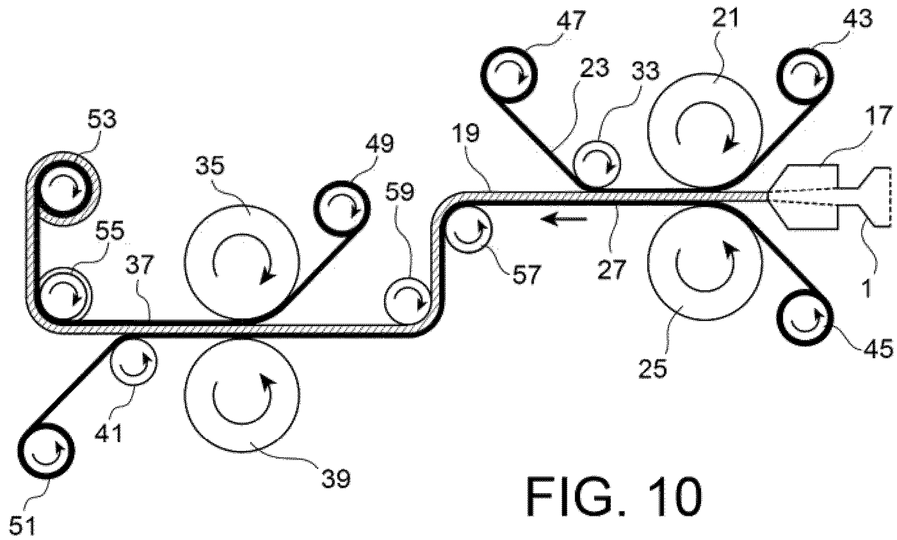


FIG. 10

[Fig. 11]

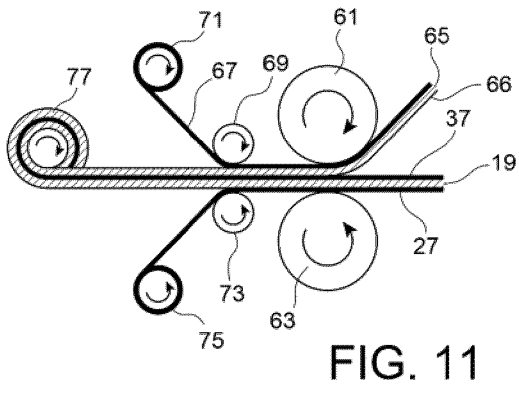


FIG. 11

[Fig. 12]

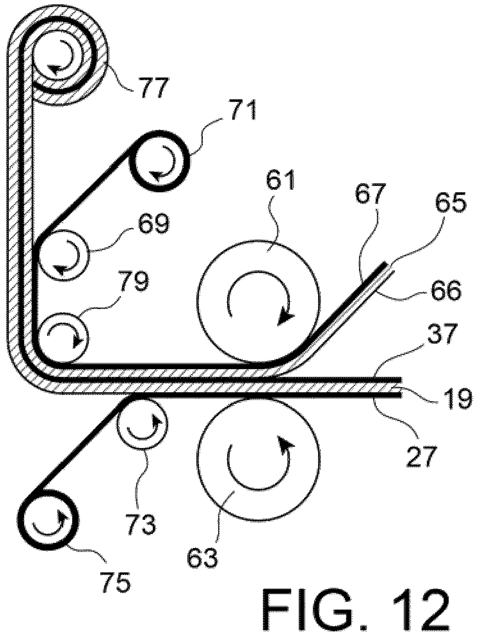


FIG. 12

[Fig. 13]

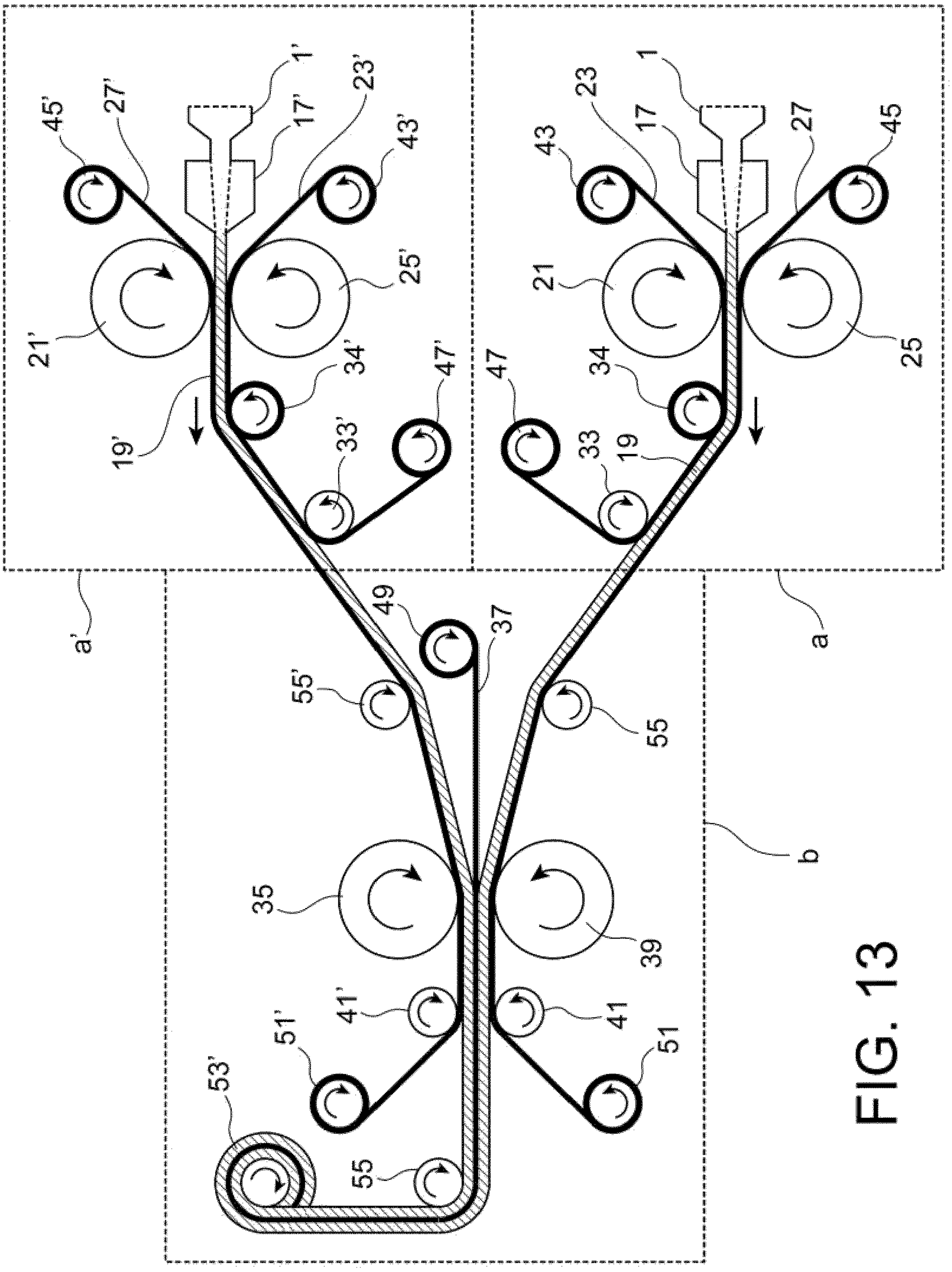
1'
17'
23'
27'
45'
43'
21'
25'
19'
34'
47'
33'
a'
1
17
23
27
43
45
21
25
19
34
47
33
a
49
37
55'
55
35
39
41'
41
51'
51
53'
55
b

FIG. 13

[Fig. 14]

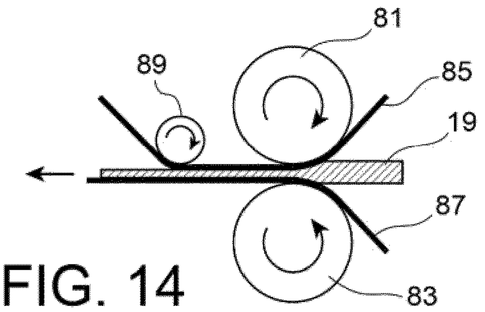


FIG. 14

[Fig. 15]

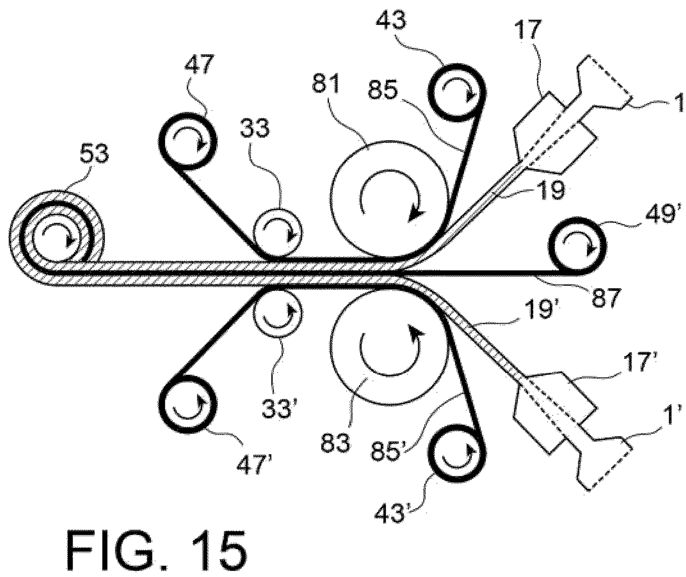


FIG. 15

Europäisches Patentamt
European Patent Office
Office européen des brevets

# RAPPORT DE RECHERCHE EUROPEENNE

Numéro de la demande
EP 24 21 4306

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | FR 3 100 930 A1 (COMMISSARIAT ENERGIE ATOMIQUE [FR]; SOLVAY SA BE [BE]) 19 mars 2021 (2021-03-19) * revendication 1; exemples 4, 5 * ----- | 1-15 | INV. H01M4/04 H01M4/139 |
| A | FR 2 881 569 A1 (BATSCAP SA [FR]) 4 août 2006 (2006-08-04) * exemples 1-7 * ----- | 1-15 | |
| A | FR 2 949 907 A1 (BATSCAP SA [FR]) 11 mars 2011 (2011-03-11) * exemples 1, 2 * ----- | 1-15 | |
| | | | DOMAINES TECHNIQUES RECHERCHES (IPC) |
| | | | H01M |

Le présent rapport a été établi pour toutes les revendications

1

| Lieu de la recherche | Date d'achèvement de la recherche | Examinateur |
|---|---|---|
| Munich | 7 avril 2025 | Koessler, Jean-Luc |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.....................................................................................................
& : membre de la même famille, document correspondant

EPO FORM 1503 03.82 (P04C02)

## ANNEXE AU RAPPORT DE RECHERCHE EUROPEENNE RELATIF A LA DEMANDE DE BREVET EUROPEEN NO.

EP 24 21 4306

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

07-04-2025

| Document brevet cité au rapport de recherche | Date de publication | Membre(s) de la famille de brevet(s) | Date de publication |
|---|---|---|---|
| FR 3100930 A1 | 19-03-2021 | CN 114424359 A | 29-04-2022 |
| | | EP 4008031 A1 | 08-06-2022 |
| | | ES 2958964 T3 | 16-02-2024 |
| | | FR 3100930 A1 | 19-03-2021 |
| | | HU E064446 T2 | 28-03-2024 |
| | | JP 2022548165 A | 16-11-2022 |
| | | KR 20220097882 A | 08-07-2022 |
| | | PL 4008031 T3 | 24-06-2024 |
| | | US 2022376222 A1 | 24-11-2022 |
| | | WO 2021053293 A1 | 25-03-2021 |
| FR 2881569 A1 | 04-08-2006 | CA 2596385 A1 | 10-08-2006 |
| | | CN 101151693 A | 26-03-2008 |
| | | EP 1844483 A1 | 17-10-2007 |
| | | ES 2661172 T3 | 27-03-2018 |
| | | FR 2881569 A1 | 04-08-2006 |
| | | JP 2008529310 A | 31-07-2008 |
| | | KR 20070099686 A | 09-10-2007 |
| | | PL 1844483 T3 | 29-06-2018 |
| | | US 2011128666 A1 | 02-06-2011 |
| | | US 2012262843 A1 | 18-10-2012 |
| | | WO 2006082172 A1 | 10-08-2006 |
| FR 2949907 A1 | 11-03-2011 | CA 2772130 A1 | 17-03-2011 |
| | | CN 102484242 A | 30-05-2012 |
| | | EP 2476153 A1 | 18-07-2012 |
| | | ES 2671055 T3 | 04-06-2018 |
| | | FR 2949907 A1 | 11-03-2011 |
| | | HU E038410 T2 | 29-10-2018 |
| | | JP 5832434 B2 | 16-12-2015 |
| | | JP 2013504846 A | 07-02-2013 |
| | | KR 20120069714 A | 28-06-2012 |
| | | PL 2476153 T3 | 28-09-2018 |
| | | US 2012202114 A1 | 09-08-2012 |
| | | WO 2011030058 A1 | 17-03-2011 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- WO 2015169835 A
- US 6203944 B
- WO 0003444 A